# EUROPEAN PATENT APPLICATION

(11) **EP 4 132 017 A1**
(43) Date of publication of application: **08.02.2023**
(21) Application number: 21803127.6
(22) Date of filing: 07.05.2021
(51) Int. Cl.: H04W 4/02

(54) **METHOD FOR MEASURING POSITIONING REFERENCE SIGNALS, AND RELATED APPARATUS**

(30) Priority: 09.05.2020 CN 202010386362
(71) Applicant: Huawei Technologies Co., Ltd., Shenzhen, Guangdong 518129 (CN)
(72) Inventor: YU, Yingjie, Shenzhen, Guangdong 518129 (CN); HUANG, Su, Shenzhen, Guangdong 518129 (CN); GUO, Yinghao, Shenzhen, Guangdong 518129 (CN)
(74) Representative: MERH-IP Matias Erny Reichl Hoffmann Patentanwälte PartG mbB
(86) International application number: PCT/CN2021/091990
(87) International publication number: WO 2021/227931

(57) **Abstract**

Embodiments of this application provide a method for measuring a positioning reference signal. The method includes: A terminal device receives first configuration information sent by a network device, where the first configuration information includes positioning reference signal PRS resource information configured by the network device for the terminal device, and the PRS resource information includes: a number of frequency layers, a number of transmission reception points TRPs at each frequency layer, a number of resource sets of each TRP, and a number of resources in each resource set. The terminal device measures, based on the PRS resource information and a predetermined rule, a part or all of PRSs configured by the network device for the terminal device. This application can resolve a technical problem that the terminal device needs to determine specific PRSs to be measured when a PRS measurement capability supported by the terminal device does not match a PRS that needs to be measured and that is indicated by the PRS resource information configured by the network device.

## Description

This application claims priority to Chinese Patent Application No. 202010386362.4 with the China National Intellectual Property Administration on May 9, 2020 and entitled "METHOD FOR MEASURING POSITIONING REFERENCE SIGNAL AND RELATED APPARATUS", which is incorporated herein by reference in its entirety.

### TECHNICAL FIELD

This application relates to the field of communication technologies, and in particular, to a method for measuring a positioning reference signal and a related apparatus.

### BACKGROUND

Knowing orientations or locations of a terminal device is important in a modem communication system. The location of the terminal device may be used to provide a life-saving service for an emergency call, which enables operators in some areas to meet legal requirements. In addition, location information of the terminal device may be used to support commercial services, for example, location based services (location based service, LBS) used for shopping, tourism, gaming, on-demand transportation, and the like. The terminal device is also referred to as user equipment (user equipment, UE).

In long term evolution (long term evolution, LTE) systems, observed time difference of arrival (observed time difference of arrival, OTDOA) is provided for a downlink positioning method. In the OTDOA, a terminal device needs to measure a positioning reference signal (positioning reference signals, PRS) sent by a cell, and a network device determines a location of the terminal device by performing a series of subsequent steps. Before the terminal device measures the PRS, the network device needs to configure a target cell list for the terminal device, so that the terminal device measures PRSs of various cells in a sequence of the target cell list.

With evolution of communication technologies, in 5th generation new radio (5th generation new radio, 5G-NR) systems, a plurality of downlink positioning methods emerge, for example, downlink time difference of arrival (downlink time difference of arrival, DL-TDOA), downlink angle-of-departure (downlink angle-of-departure, DL-AOD), and multi round-trip time (multi round-trip time, Multi-RTT). In the foregoing positioning methods, the terminal device needs to measure a PRS. Before the terminal device measures the PRS, the network device needs to configure PRS resource information for the terminal device, where the PRS resource information may be a PRS index list (PRS-IndexList), and the PRS resource information indicates specific PRSs to be measured by the terminal device.

The terminal device measures the PRS based on the indication of the PRS resource information. Due to performance differences between different terminal devices, downlink PRS measurement capabilities supported by the different terminal devices may be different. A downlink PRS measurement capability indicates a maximum PRS measurement capability supported by a terminal device. The terminal device cannot determine specific PRSs to be measured when the downlink PRS measurement capability supported by the terminal device does not meet a PRS that needs to be measured and that is indicated by the PRS resource information.

### SUMMARY

Embodiments of this application provide a method for measuring a positioning reference signal. This application provides a solution that a terminal device needs to determine specific PRSs to be measured when a downlink positioning reference signal PRS measurement capability supported by the terminal device does not match or does not meet a PRS that needs to be measured and that is indicated by PRS resource information configured by a network device.

According to a first aspect, an embodiment of this application provides a method for measuring a positioning reference signal, and the method may include:
A terminal device first receives first configuration information sent by a network device, where the first configuration information includes positioning reference signal PRS resource information configured by the network device for the terminal device. In an optional implementation, the first configuration information may be carried in an LTE positioning protocol (LTE positioning protocol, LPP). Specifically, a location management unit (Location management function, LMF) sends PRS resource information to the terminal device through the LPP, where the PRS resource information may be a PRS index list. In another optional implementation, the first configuration information may be carried in radio resource control (radio resource control, RRC). Specifically, a location management component (location management component, LMC) sends PRS resource information to the terminal device through the RRC, where the PRS resource information may be a PRS index list. The PRS resource information includes: a number of frequency layers, a number of transmission reception points TRPs at each frequency layer, a number of resource sets of each TRP, and a number of resources in each resource set.

The terminal device then measures, based on the PRS resource information and a predetermined rule, a part or all of PRSs configured by the network device for the terminal device. In this embodiment, a relationship between a downlink PRS measurement capability supported by the terminal device and a resource selected from the PRS resource information configured by the network device is referred to as a predetermined rule.

In this embodiment of this application, according to the foregoing method, the terminal device selects, based on the supported downlink PRS measurement capability, a part or all of resources from the PRS resource information configured by the network device, and then measures, based on the part or all of the resources, the part or all of the PRSs configured by the network device for the terminal device. This resolves a technical problem that the terminal device needs to determine specific PRSs to be measured when a PRS measurement capability supported by the terminal device does not match or does not meet a PRS that needs to be measured and that is indicated by the PRS resource information configured by the network device.

With reference to the first aspect, in a possible implementation of the first aspect, the predetermined rule may include:
The terminal device first selects, based on a supported number M of frequency layers, resources corresponding to the first M frequency layers or any M frequency layers from the number of frequency layers, where M is a positive integer. For example, when the number of frequency layers in the PRS resource information configured by the network device is 4, and the number M of frequency layers supported by the terminal device is equal to 2, the terminal device selects, based on the supported number 2 of frequency layers, resources corresponding to the first two frequency layers from the number of frequency layers. In this embodiment of this application, a new predetermined rule is described to improve applicability and implementation flexibility of this solution.

With reference to the first aspect, in a possible implementation of the first aspect, the predetermined rule may include:
The terminal device selects, based on a supported number K of TRPs at each frequency layer, resources corresponding to the first K TRPs or any K TRPs from TRPs corresponding to each of the M frequency layers, where K is a positive integer. For example, when the number of frequency layers in the PRS resource information configured by the network device is 2, the number of TRPs at each frequency layer is 8, and the number K of TRPs at each frequency layer supported by the terminal device is equal to 2, the terminal device selects, based on the supported number K=2 of TRPs at each frequency layer, resources corresponding to the first two TRPs from TRPs corresponding to each of the first two frequency layers. In this embodiment of this application, a new predetermined rule is described to improve applicability and implementation flexibility of this solution.

With reference to the first aspect, in a possible implementation of the first aspect, the predetermined rule may include:
The terminal device first selects, based on a supported number M of frequency layers, resources corresponding to the first M frequency layers or any M frequency layers from the number of frequency layers, where M is a positive integer. The terminal device then selects, based on a supported total number T of TRPs, resources corresponding to the first T TRPs or any T TRPs from TRPs corresponding to the M frequency layers, where T is a positive integer. For example, when the number of frequency layers in the PRS resource information configured by the network device is 4, the number of TRPs at each frequency layer is 8, the number M of frequency layers supported by the terminal device is equal to 2, and the supported total number T of TRPs is equal to 12, the terminal device selects, based on the supported total number T=12 of TRPs, resources corresponding to the first 12 TRPs at the first two frequency layers. In this embodiment of this application, a new predetermined rule is described to improve applicability and implementation flexibility of this solution.

With reference to the first aspect, in a possible implementation of the first aspect, the predetermined rule may further include:
The terminal device selects, based on a supported number S of resource sets of each TRP, resources corresponding to the first S resource sets or any S resource sets from resource sets corresponding to each TRP included in the M frequency layers, resource sets corresponding to each of the K TRPs, or resource sets corresponding to each of the T TRPs, where S is a positive integer. For example, when the number of frequency layers in the PRS resource information configured by the network device is 4, the number of TRPs at each frequency layer is 8, the number of resource sets of each TRP is 2, the number M of frequency layers supported by the terminal device is equal to 2, the number K of TRPs at each frequency layer is equal to 2, and the supported number S of resource sets is equal to 1, the terminal device selects, based on the supported number S=1 of resource sets, resources corresponding to the first resource set from the first two TRPs at the first two frequency layers. For example, when the number of frequency layers in the PRS resource information configured by the network device is 4, the number of TRPs at each frequency layer is 8, the number of resource sets of each TRP is 2, and the number K of TRPs at each frequency layer supported by the terminal device is equal to 2, the terminal device selects, based on the number K=2 of TRPs at each frequency layer, resources corresponding to two resource sets from the first two TRPs at the first four frequency layers. In this embodiment of this application, a new predetermined rule is described to improve applicability and implementation flexibility of this solution.

With reference to the first aspect, in a possible implementation of the first aspect, the predetermined rule may further include:
The terminal device selects, based on a supported number Q of resources in each resource set, the first Q resources or any Q resources from resources corresponding to each resource set included in the M frequency layers, resources corresponding to each resource set included in the K TRPs, resources corresponding to each resource set included in the T TRPs, or resources corresponding to each of the S resource sets, where Q is a positive integer. For example, when the number of frequency layers in the PRS resource information configured by the network device is 4, the number of TRPs at each frequency layer is 8, the number of resource sets of each TRP is 2, the number of resources in each resource set is 4, the number M of frequency layers supported by the terminal device is equal to 2, the number K of TRPs at each frequency layer is equal to 2, the supported number S of resource sets is equal to 1, and the supported number Q of resources in each resource set is equal to 1, the terminal device selects the first resource in the first resource set from the first two TRPs at the first two frequency layers based on the supported number Q=1 of resources in each resource set. In this embodiment of this application, a new predetermined rule is described to improve applicability and implementation flexibility of this solution.

With reference to the first aspect, in a possible implementation of the first aspect, the predetermined rule may further include:
The terminal device selects, based on a supported total number W of resources, the first W resources or any W resources from resources included in the M frequency layers, resources corresponding to the S resource sets included in each of the K TRPs included in each of the M frequency layers, or resources corresponding to the S resource sets included in each of the T TRPs, where W is a positive integer. For example, when the number of frequency layers in the PRS resource information configured by the network device is 4, the number of TRPs at each frequency layer is 8, the number of resource sets of each TRP is 2, the number of resources in each resource set is 4, and the total number W of resources supported by the terminal device is equal to 10, the terminal device selects the first 10 resources in the first resource set from TRPs at the first two frequency layers based on the supported total number W=10 of resources. It should be noted that any 10 resources may alternatively be selected. In this embodiment of this application, a new predetermined rule is described to improve applicability and implementation flexibility of this solution.

With reference to the first aspect, in a possible implementation of the first aspect, the predetermined rule may further include:
The terminal device selects, based on a supported number E of resources at each frequency layer, the first E resources or any E resources from resources corresponding to each of the M frequency layers, the first E resources or any E resources from resources corresponding to the S resource sets included in each of the K TRPs included in each of the M frequency layers, or the first E resources or any E resources at a same frequency layer from resources corresponding to the S resource sets included in each of the T TRPs, where E is a positive integer. For example, when the number of frequency layers in the PRS resource information configured by the network device is 4, the number of TRPs at each frequency layer is 8, the number of resource sets of each TRP is 2, the number of resources in each resource set is 4, the number M of frequency layers supported by the terminal device is equal to 2, and the supported number E of resources at each frequency layer is equal to 50, the terminal device selects the first 50 resources at each of the first two frequency layers based on the supported number E=50 of resources at each frequency layer. It should be noted that any 50 resources may alternatively be selected at each of the first two frequency layers. In this embodiment of this application, a new predetermined rule is described to improve applicability and implementation flexibility of this solution.

With reference to the first aspect, in a possible implementation of the first aspect, the predetermined rule may include:
The terminal device selects, based on a supported number M of frequency layers, resources corresponding to the first M frequency layers or any M frequency layers from the number of frequency layers, where M is a positive integer. When the terminal device supports both a number K of TRPs at each frequency layer and a total number T of TRPs, the terminal device first selects, based on the supported number K of TRPs at each frequency layer, resources corresponding to the first K TRPs or any K TRPs from TRPs corresponding to each of the M frequency layers, and determines selected K*M TRPs. The terminal device then selects, based on the supported total number T of TRPs, resources corresponding to the first T TRPs or any T TRPs from the K*M TRPs. For example, when the number of frequency layers in the PRS resource information configured by the network device is 4, the number of TRPs at each frequency layer is 8, the number K of TRPs at each frequency layer supported by the terminal device is equal to 2, and the supported total number T of TRPs is equal to 12, the terminal device first selects, based on the number K=2 of TRPs at each frequency layer supported by the terminal device, resources corresponding to two TRPs (the first two TRPs or any two TRPs) at each of the four frequency layers, and determines selected K*M=4*2=8 TRPs. The terminal device then selects 12 TRPs (the first 12 TRPs or any 12 TRPs) from K*M=8 TRPs based on the supported total number T= 12 of TRPs. Because K*M=4*2=8, and T>K*M, the terminal device selects two TRPs (the first two TRPs or any two TRPs) at each of the four frequency layers, and selects resources corresponding to the eight TRPs in total. In this embodiment of this application, a new predetermined rule is described to improve applicability and implementation flexibility of this solution.

With reference to the first aspect, in a possible implementation of the first aspect, the predetermined rule may further include:
When the terminal device supports both the number Q of resources in each resource set and the total number W of resources, the terminal device selects the first W resources or any W resources from a first candidate resource set based on the supported number Q of resources in each resource set and the supported total number W of resources, where the first candidate resource set is determined based on the Q resources supported by each resource set and one or more of a number of frequency layers supported by the terminal device, a number of TRPs supported by each frequency layer, a total number of TRPs, and a number of resource sets supported by each TRP. Specifically, when the terminal device supports both the number Q of resources in each resource set and the total number W of resources, a resource set supported by the terminal device is first determined based on the one or more of the number of frequency layers supported by the terminal device, the number of TRPs at each frequency layer, the total number of TRPs, and the number of resource sets supported by each TRP. The downlink PRS measurement capability includes one or more of the number M of frequency layers, the number K of TRPs at each frequency layer, the total number T of TRPs, the number S of resource sets of each TRP, the number Q of resources in each resource set, the total number W of resources, and the number E of resources at each frequency layer. When the terminal device does not include any one of the foregoing downlink PRS measurement capabilities, it indicates that the terminal device supports a maximum value allowed by the downlink PRS measurement capability. The terminal device selects, based on the supported number Q of resources in each resource set, the first Q resources or any Q resources in each resource set from resources corresponding to the foregoing determined resource set supported by the terminal device, to form the first candidate resource set. Then, the terminal device selects, based on the supported total number W of resources, the first W resources or any W resources from the resources corresponding to the first candidate resource set. For example, when the number of frequency layers in the PRS resource information configured by the network device is 4, the number of TRPs at each frequency layer is 8, the number of resource sets of each TRP is 2, the number of resources in each resource set is 4, and the number Q of resources in each resource set supported by the terminal device is equal to 1, the terminal device first selects the first resource in each resource set from each TRP at each frequency layer as the first candidate resource set based on the supported number Q=1 of resources in each resource set. It should be noted that any one resource may alternatively be selected. The terminal device then selects 32 resources (the first 32 resources or any 32 resources) from the first candidate resource set based on the supported total number W=32 of resources. In this embodiment of this application, a new predetermined rule is described to improve applicability and implementation flexibility of this solution.

With reference to the first aspect, in a possible implementation of the first aspect, the predetermined rule may further include:
When the terminal device supports both the number Q of resources in each resource set and the number E of resources at each frequency layer, the terminal device selects the first E resources or any E resources at each frequency layer from a first candidate resource set based on the supported number Q of resources in each resource set and the supported number E of resources at each frequency layer, where the first candidate resource set is determined based on the Q resources supported by each resource set and one or more of a number of frequency layers supported by the terminal device, a number of TRPs supported by each frequency layer, a total number of TRPs, and a number of resource sets supported by each TRP. Specifically, a resource set supported by the terminal device is first determined based on the one or more of the number of frequency layers supported by the terminal device, the number of TRPs at each frequency layer, the total number of TRPs, and the number of resource sets supported by each TRP. The terminal device selects, based on the supported number Q of resources in each resource set, the first Q resources or any Q resources from resources corresponding to the foregoing determined resource set supported by the terminal device, to form the first candidate resource set. Then, the terminal device selects, based on the supported number E of resources at each frequency layer, the first E resources or any E resources at a same frequency layer from the resources corresponding to the first candidate resource set. For example, when the number of frequency layers in the PRS resource information configured by the network device is 4, the number of TRPs at each frequency layer is 8, the number of resource sets of each TRP is 2, the number of resources in each resource set is 4, and the number Q of resources in each resource set supported by the terminal device is equal to 1, the terminal device first selects the first resource in each resource set from each TRP at each frequency layer based on the supported number Q=1 of resources in each resource set, and uses selected 4^{∗}8^{∗}2^{∗}1=64 resources as the first candidate resource set. It should be noted that any one resource may alternatively be selected. The terminal device then selects 10 resources (the first 10 resources or any 10 resources) at a same frequency layer in the first candidate resource set based on the supported number E= 10 of resources at each frequency layer. In this embodiment of this application, a new predetermined rule is described to improve applicability and implementation flexibility of this solution.

With reference to the first aspect, in a possible implementation of the first aspect, the predetermined rule may further include:
When the terminal device supports both the total number W of resources and the number E of resources at each frequency layer, the terminal device selects the first W resources or any W resources from a second candidate resource set based on the supported number E of resources at each frequency layer and the supported total number W of resources, where the second candidate resource set is determined based on the E resources supported by each frequency layer and one or more of a number of frequency layers supported by the terminal device, a number of TRPs supported by each frequency layer, a total number of TRPs, and a number of resource sets supported by each TRP. Specifically, a resource set supported by the terminal device is first determined based on the one or more of the number of frequency layers supported by the terminal device, the number of TRPs at each frequency layer, the total number of TRPs, and the number of resource sets supported by each TRP. The terminal device selects, based on the number E of resources supported by each frequency layer, the first E resources or any E resources at a same frequency layer from the foregoing determined resources supported by the terminal device, to form the second candidate resource set. Then, the terminal device selects, based on the total number W of resources, the first W resources or any W resources from the resources corresponding to the second candidate resource set. For example, when the number of frequency layers in the PRS resource information configured by the network device is 4, the number of TRPs at each frequency layer is 8, the number of resource sets of each TRP is 2, and the number of resources in each resource set is 4, the terminal device first selects 10 resources (the first 10 resources or any 10 resources) at each frequency layer based on the supported number E=10 of resources at each frequency layer, and uses selected 4^{∗}10=40 resources as the second candidate resource set. The terminal device then selects 32 resources (the first 32 resources or any 32 resources) from the resources (40 resources) corresponding to the second candidate resource set based on the supported total number W=32 of resources. In this embodiment of this application, a new predetermined rule is described to improve applicability and implementation flexibility of this solution.

With reference to the first aspect, in a possible implementation of the first aspect, the predetermined rule may further include:
When the terminal device supports both the number Q of resources in each resource set, the total number W of resources, and the number E of resources at each frequency layer, a resource set supported by the terminal device is first determined based on the one or more of the number of frequency layers supported by the terminal device, the number of TRPs at each frequency layer, the total number of TRPs, and the number of resource sets supported by each TRP. The terminal device selects, based on the supported number Q of resources in each resource set, the first Q resources or any Q resources from resources corresponding to the foregoing determined resource set supported by the terminal device, to form the first candidate resource set. Next, the terminal device selects, based on the supported number E of resources at each frequency layer, the first E resources or any E resources at a same frequency layer from the resources corresponding to the first candidate resource set, to form a third candidate resource set, where the third candidate resource set is determined based on the first candidate resource set and the E resources supported by each frequency layer. Then, the terminal device selects, based on the total number W of resources, the first W resources or any W resources from the resources corresponding to the third candidate resource set. For example, when the number of frequency layers in the PRS resource information configured by the network device is 4, the number of TRPs at each frequency layer is 8, the number of resource sets of each TRP is 2, and the number of resources in each resource set is 4, the terminal device first selects the first resource in each resource set from each TRP at each frequency layer based on the supported number Q= 1 of resources in each resource set. It should be noted that any one resource may alternatively be selected, a number of selected resources is 4^{∗}8^{∗}2^{∗}1=64, and the 64 resources form the first candidate resource set. Next, the terminal device selects 10 resources (the first 10 resources or any 10 resources) at each frequency layer in the first candidate resource set based on the supported number E=10 of resources at each frequency layer. A number of selected resources is 4^{∗}10=40, and the 40 resources are used as the third candidate resource set. Then, the terminal device selects 32 resources (the first 32 resources or any 32 resources) from the third candidate resource set based on the supported total number W=32 of resources. In this embodiment of this application, a new predetermined rule is described to improve applicability and implementation flexibility of this solution.

With reference to the first aspect, in a possible implementation of the first aspect, when a downlink PRS measurement capability included in the predetermined rule is not indicated or configured, it indicates that the terminal device supports a maximum value allowed by the downlink PRS measurement capability, and the downlink PRS measurement capability may include one or more of the number M of frequency layers, the number K of TRPs at each frequency layer, the total number T of TRPs, the number S of resource sets of each TRP, the number Q of resources in each resource set, the total number W of resources, and the number E of resources at each frequency layer. For example, when the "number of frequency layers" is not indicated or configured in the downlink PRS measurement capability of the terminal device, the number of frequency layers supported by the terminal device is the maximum value 4. In this embodiment of this application, a new predetermined rule is described to improve applicability and implementation flexibility of this solution.

With reference to the first aspect, in a possible implementation of the first aspect, that the terminal device measures, based on the PRS resource information and a predetermined rule, a part or all of PRSs configured by the network device for the terminal device may include: When two or more positioning methods are configured for the terminal device, the terminal device measures, based on a common part of the PRS resource information configured according to the two or more positioning methods and the predetermined rule, the part or all of the PRSs configured by the network device for the terminal device. For example, PRS resource information configured in a positioning method 1 includes frequency layers 1 to 4, each frequency layer includes TRPs 1 to 4, each TRP includes resource sets 1 and 2, and each resource set includes resources 1 to 4. PRS resource information configured in a positioning method 2 includes frequency layers 1 and 2, each frequency layer includes TRPs 1 to 5, each TRP includes a resource set 1, and each resource set includes resources 1 to 6. Therefore, a common part of the two pieces of PRS resource information is determined based on the PRS resource information configured in the positioning method 1 and the PRS resource information configured in the positioning method 2. For example, the common part of the two pieces of PRS resource information includes the frequency layers 1 and 2, each frequency layer includes the TRPs 1 to 4, each TRP includes the resource set 1, and each resource set includes the resources 1 to 4.

In this embodiment of this application, when the two or more positioning methods are configured for the terminal device, the common part of the PRS resource information configured according to the two or more positioning methods and the predetermined rule may be selected to measure the part or all of the PRSs configured by the network device for the terminal device, thereby improving implementation flexibility of this solution.

With reference to the first aspect, in a possible implementation of the first aspect, that the terminal device measures, based on the PRS resource information and a predetermined rule, a part or all of PRSs configured by the network device for the terminal device may include: When two or more positioning methods are configured for the terminal device, the terminal device measures, based on the PRS resource information configured according to any one of the positioning methods and the predetermined rule, the part or all of the PRSs configured by the network device for the terminal device. For example, PRS resource information configured in a positioning method 1 includes frequency layers 1 to 4, each frequency layer includes TRPs 1 to 4, each TRP includes resource sets 1 and 2, and each resource set includes resources 1 to 4. PRS resource information configured in a positioning method 2 includes frequency layers 1 and 2, each frequency layer includes TRPs 1 to 5, each TRP includes a resource set 1, and each resource set includes resources 1 to 6. The terminal device measures, based on the PRS resource information configured in the positioning method 1 or based on the PRS resource information configured in the positioning method 2 and the predetermined rule, the part of or all of the PRSs configured by the network device for the terminal device.

In this embodiment of this application, when the two or more positioning methods are configured for the terminal device, the PRS resource information configured according to any one of the positioning methods and the predetermined rule may be selected to measure the part or all of the PRSs configured by the network device for the terminal device, thereby improving implementation flexibility of this solution.

According to a second aspect, an embodiment of this application provides a terminal device. The terminal device may include a processor and a radio frequency circuit connected to the processor.

The radio frequency circuit is configured to receive first configuration information sent by a network device, where the first configuration information includes positioning reference signal PRS resource information configured by the network device for the terminal device, and the PRS resource information may include: a number of frequency layers, a number of transmission reception points TRPs at each frequency layer, a number of resource sets of each TRP, and a number of resources in each resource set.

The processor is configured to measure, based on the PRS resource information and a predetermined rule, a part or all of PRSs configured by the network device for the terminal device.

With reference to the second aspect, in a possible implementation of the second aspect, the predetermined rule includes: selecting, based on a supported number M of frequency layers, resources corresponding to the first M frequency layers or any M frequency layers from the number of frequency layers, where M is a positive integer.

With reference to the second aspect, in a possible implementation of the second aspect, the predetermined rule further includes: selecting, based on a supported number K of TRPs at each frequency layer, resources corresponding to the first K TRPs or any K TRPs from TRPs corresponding to each of the M frequency layers, where K is a positive integer.

With reference to the second aspect, in a possible implementation of the second aspect, the predetermined rule specifically includes: first selecting, based on a supported number M of frequency layers, resources corresponding to the first M frequency layers or any M frequency layers from the number of frequency layers, where M is a positive integer; and then selecting, based on a supported total number T of TRPs, resources corresponding to the first T TRPs or any T TRPs from TRPs corresponding to the M frequency layers, where T is a positive integer.

With reference to the second aspect, in a possible implementation of the second aspect, the predetermined rule further includes: selecting, based on a supported number S of resource sets of each TRP, resources corresponding to the first S resource sets or any S resource sets from resource sets corresponding to each TRP included in the M frequency layers, resource sets corresponding to each of the K TRPs, or resource sets corresponding to each of the T TRPs, where S is a positive integer.

With reference to the second aspect, in a possible implementation of the second aspect, the predetermined rule further includes: selecting, based on a supported number Q of resources in each resource set, the first Q resources or any Q resources from resources corresponding to each resource set included in the M frequency layers, resources corresponding to each resource set included in the K TRPs, resources corresponding to each resource set included in the T TRPs, or resources corresponding to each of the S resource sets, where Q is a positive integer.

With reference to the second aspect, in a possible implementation of the second aspect, the predetermined rule further includes: selecting, based on a supported total number W of resources, the first W resources or any W resources from resources included in the M frequency layers, resources corresponding to the S resource sets included in each of the K TRPs included in each of the M frequency layers, or resources corresponding to the S resource sets included in each of the T TRPs, where W is a positive integer.

With reference to the second aspect, in a possible implementation of the second aspect, the predetermined rule further includes: selecting, based on a supported number E of resources at each frequency layer, the first E resources or any E resources from resources corresponding to each of the M frequency layers, the first E resources or any E resources from resources corresponding to the S resource sets included in each of the K TRPs included in each of the M frequency layers, or the first E resources or any E resources at a same frequency layer from resources corresponding to the S resource sets included in each of the T TRPs, where E is a positive integer.

With reference to the second aspect, in a possible implementation of the second aspect, the predetermined rule further includes: selecting, based on a supported number M of frequency layers, resources corresponding to the first M frequency layers or any M frequency layers from the number of frequency layers, where M is a positive integer.

The predetermined rule further includes: When the terminal device supports both a number K of TRPs at each frequency layer and a total number T of TRPs, selecting, based on the supported number K of TRPs at each frequency layer, resources corresponding to the first K TRPs or any K TRPs from TRPs corresponding to each of the M frequency layers, and determining selected K^{∗}M TRPs.

The predetermined rule further includes: selecting, based on the supported total number T of TRPs, resources corresponding to the first T TRPs or any T TRPs from the K^{∗}M TRPs.

With reference to the second aspect, in a possible implementation of the second aspect, when the terminal device supports both the number Q of resources in each resource set and the total number W of resources, the predetermined rule further includes: selecting the first W resources or any W resources from a first candidate resource set based on the supported number Q of resources in each resource set and the supported total number W of resources, where the first candidate resource set is determined based on the Q resources supported by each resource set and one or more of a number of frequency layers supported by the terminal device, a number of TRPs supported by each frequency layer, a total number of TRPs, and a number of resource sets supported by each TRP.

With reference to the second aspect, in a possible implementation of the second aspect, when the terminal device supports both the number Q of resources in each resource set and the number E of resources at each frequency layer, the predetermined rule further includes: selecting the first E resources or any E resources at each frequency layer from a first candidate resource set based on the supported number Q of resources in each resource set and the supported number E of resources at each frequency layer, where the first candidate resource set is determined based on the Q resources supported by each resource set and one or more of a number of frequency layers supported by the terminal device, a number of TRPs supported by each frequency layer, a total number of TRPs, and a number of resource sets supported by each TRP.

With reference to the second aspect, in a possible implementation of the second aspect, when the terminal device supports both the total number W of resources and the number E of resources at each frequency layer, the predetermined rule further includes: selecting the first W resources or any W resources from a second candidate resource set based on the supported number E of resources at each frequency layer and the supported total number W of resources, where the second candidate resource set is determined based on the E resources supported by each frequency layer and one or more of a number of frequency layers supported by the terminal device, a number of TRPs supported by each frequency layer, a total number of TRPs, and a number of resource sets supported by each TRP.

With reference to the second aspect, in a possible implementation of the second aspect, when the terminal device supports all of the number Q of resources in each resource set, the total number W of resources, and the number E of resources at each frequency layer, the predetermined rule further includes: selecting the first E resources or any E resources at each frequency layer from the first candidate resource set based on the supported number Q of resources in each resource set and the supported number E of resources at each frequency layer.

The predetermined rule further includes: selecting the first W resources or any W resources from a third candidate resource set based on the supported total number W of resources, where the third candidate resource set is determined based on the first candidate resource set and the E resources supported by each frequency layer.

With reference to the second aspect, in a possible implementation of the second aspect, when a downlink PRS measurement capability included in the predetermined rule is not indicated or configured, it indicates that the terminal device supports a maximum value allowed by the downlink PRS measurement capability, and the downlink PRS measurement capability may include one or more of the number M of frequency layers, the number K of TRPs at each frequency layer, the total number T of TRPs, the number S of resource sets of each TRP, the number Q of resources in each resource set, the total number W of resources, and the number E of resources at each frequency layer.

With reference to the second aspect, in a possible implementation of the second aspect, when two or more positioning methods are configured for the terminal device, the processor is further configured to measure, based on a common part of the PRS resource information configured according to the two or more positioning methods and the predetermined rule, the part or all of the PRSs configured by the network device for the terminal device.

With reference to the second aspect, in a possible implementation of the second aspect, when two or more positioning methods are configured for the terminal device, the processor is further configured to measure, based on the PRS resource information configured according to any one of the positioning methods and the predetermined rule, the part or all of the PRSs configured by the network device for the terminal device.

According to a third aspect, an embodiment of this application proposes an apparatus for measuring a positioning reference signal, and the apparatus may include:
a receiving module, configured to receive first configuration information sent by a network device, where the first configuration information includes positioning reference signal PRS resource information configured by the network device for the terminal device, and
the PRS resource information may include: a number of frequency layers, a number of transmission reception points TRPs at each frequency layer, a number of resource sets of each TRP, and a number of resources in each resource set; and
a processing module, configured to measure, based on the PRS resource information and a predetermined rule, a part or all of PRSs configured by the network device for the terminal device.

With reference to the third aspect, in a possible implementation of the third aspect, the processing module is specifically configured to select, based on a supported number M of frequency layers, resources corresponding to the first M frequency layers or any M frequency layers from the number of frequency layers, where M is a positive integer.

With reference to the third aspect, in a possible implementation of the third aspect, the processing module is further configured to select, based on a supported number K of TRPs at each frequency layer, resources corresponding to the first K TRPs or any K TRPs from TRPs corresponding to each of the M frequency layers, where K is a positive integer.

With reference to the third aspect, in a possible implementation of the third aspect, the processing module is specifically configured to: first select, based on a supported number M of frequency layers, resources corresponding to the first M frequency layers or any M frequency layers from the number of frequency layers, where M is a positive integer; and then select, based on a supported total number T of TRPs, resources corresponding to the first T TRPs or any T TRPs from TRPs corresponding to the M frequency layers, where T is a positive integer.

With reference to the third aspect, in a possible implementation of the third aspect, the processing module is further configured to select, based on a supported number S of resource sets of each TRP, resources corresponding to the first S resource sets or any S resource sets from resource sets corresponding to each TRP included in the M frequency layers, resource sets corresponding to each of the K TRPs, or resource sets corresponding to each of the T TRPs, where S is a positive integer.

With reference to the third aspect, in a possible implementation of the third aspect, the processing module is further configured to: select, based on a supported number Q of resources in each resource set, the first Q resources or any Q resources from resources corresponding to each resource set included in the M frequency layers, resources corresponding to each resource set included in the K TRPs, resources corresponding to each resource set included in the T TRPs, or resources corresponding to each of the S resource sets, where Q is a positive integer.

With reference to the third aspect, in a possible implementation of the third aspect, the processing module is further configured to select, based on a supported total number W of resources, the first W resources or any W resources from resources included in the M frequency layers, resources corresponding to the S resource sets included in each of the K TRPs included in each of the M frequency layers, or resources corresponding to the S resource sets included in each of the T TRPs, where W is a positive integer.

With reference to the third aspect, in a possible implementation of the third aspect, the processing module is further configured to select, based on a supported number E of resources at each frequency layer, the first E resources or any E resources from resources corresponding to each of the M frequency layers, the first E resources or any E resources from resources corresponding to the S resource sets included in each of the K TRPs included in each of the M frequency layers, or the first E resources or any E resources at a same frequency layer from resources corresponding to the S resource sets included in each of the T TRPs, where E is a positive integer.

With reference to the third aspect, in a possible implementation of the third aspect, the processing module is further configured to select, based on a supported number M of frequency layers, resources corresponding to the first M frequency layers or any M frequency layers from the number of frequency layers, where M is a positive integer.

When the terminal device supports both a number K of TRPs at each frequency layer and a total number T of TRPs,

The processing module is further configured to: select, based on the supported number K of TRPs at each frequency layer, resources corresponding to the first K TRPs or any K TRPs from TRPs corresponding to each of the M frequency layers, and determine selected K^{∗}M TRPs.

The processing module is further configured to select, based on the supported total number T of TRPs, resources corresponding to the first T TRPs or any T TRPs from the K^{∗}M TRPs.

With reference to the third aspect, in a possible implementation of the third aspect, when the terminal device supports both the number Q of resources in each resource set and the total number W of resources, the processing module is further configured to select the first W resources or any W resources from a first candidate resource set based on the supported number Q of resources in each resource set and the supported total number W of resources, where the first candidate resource set is determined based on the Q resources supported by each resource set and one or more of a number of frequency layers supported by the terminal device, a number of TRPs supported by each frequency layer, a total number of TRPs, and a number of resource sets supported by each TRP.

With reference to the third aspect, in a possible implementation of the third aspect, when the terminal device supports both the number Q of resources in each resource set and the number E of resources at each frequency layer, the processing module is further configured to select the first E resources or any E resources at each frequency layer from a first candidate resource set based on the supported number Q of resources in each resource set and the supported number E of resources at each frequency layer, where the first candidate resource set is determined based on the Q resources supported by each resource set and one or more of a number of frequency layers supported by the terminal device, a number of TRPs supported by each frequency layer, a total number of TRPs, and a number of resource sets supported by each TRP.

With reference to the third aspect, in a possible implementation of the third aspect, when the terminal device supports both the total number W of resources and the number E of resources at each frequency layer, the processing module is further configured to select the first W resources or any W resources from a second candidate resource set based on the supported number E of resources at each frequency layer and the supported total number W of resources, where the second candidate resource set is determined based on the E resources supported by each frequency layer and one or more of a number of frequency layers supported by the terminal device, a number of TRPs supported by each frequency layer, a total number of TRPs, and a number of resource sets supported by each TRP.

With reference to the third aspect, in a possible implementation of the third aspect, when the terminal device supports all of the number Q of resources in each resource set, the total number W of resources, and the number E of resources at each frequency layer, the processing module is further configured to select the first E resources or any E resources at each frequency layer from the first candidate resource set based on the supported number Q of resources in each resource set and the supported number E of resources at each frequency layer.

The processing module is further configured to select the first W resources or any W resources from a third candidate resource set based on the supported total number W of resources, where the third candidate resource set is determined based on the first candidate resource set and the E resources supported by each frequency layer.

With reference to the third aspect, in a possible implementation of the third aspect, when a downlink PRS measurement capability included in the predetermined rule is not indicated or configured, it indicates that the terminal device supports a maximum value allowed by the downlink PRS measurement capability, and the downlink PRS measurement capability may include one or more of the number M of frequency layers, the number K of TRPs at each frequency layer, the total number T of TRPs, the number S of resource sets of each TRP, the number Q of resources in each resource set, the total number W of resources, and the number E of resources at each frequency layer.

With reference to the third aspect, in a possible implementation of the third aspect, when two or more positioning methods are configured for the terminal device, the processing module is further configured to measure, based on a common part of the PRS resource information configured according to the two or more positioning methods and the predetermined rule, the part or all of the PRSs configured by the network device for the terminal device.

With reference to the third aspect, in a possible implementation of the third aspect, when two or more positioning methods are configured for the terminal device, the processing module is further configured to measure, based on the PRS resource information configured according to any one of the positioning methods and the predetermined rule, the part or all of the PRSs configured by the network device for the terminal device.

According to a fourth aspect, an embodiment of this application provides a terminal device. The terminal device includes at least one processor, a memory, a communication port, a display, and computer-executable instructions that are stored in the memory and are executable on the processor. When the computer-executable instructions are executed by the processor, the processor performs the method in any one of the first aspect or the possible implementations of the first aspect.

According to a fifth aspect, an embodiment of this application provides a computer-readable storage medium storing one or more computer-executable instructions. When the computer-executable instructions are executed by a processor, the processor performs the method in any one of the first aspect or the possible implementations of the first aspect.

According to a sixth aspect, an embodiment of this application provides a computer program product (also referred to as a computer program) that stores one or more computer-executable instructions. When the computer-executable instructions are executed by a processor, the processor performs the method in any one of the first aspect or the possible implementations of the first aspect.

According to a seventh aspect, this application provides a chip system. The chip system includes a processor, configured to support a computer device in implementing functions in the foregoing aspects. In a possible design, the chip system further includes a memory. The memory is configured to store program instructions and data that are necessary for a computer device. The chip system may include a chip, or may include a chip and another discrete component.

### BRIEF DESCRIPTION OF DRAWINGS

FIG. 1a is a schematic architectural diagram of a communication system according to an embodiment of this application;
FIG. 1b is a schematic architectural diagram of another communication system according to an embodiment of this application;
FIG. 1c is a schematic architectural diagram of still another communication system according to an embodiment of this application;
FIG. 1d is a schematic diagram of a hardware structure of a terminal device according to an embodiment of this application;
FIG. 2 is a schematic flowchart of a positioning method according to an embodiment of this application;
FIG. 3 is a schematic diagram of an embodiment of positioning reference signal measurement according to an embodiment of this application;
FIG. 4a is a schematic diagram of PRS resource information according to an embodiment of this application;
FIG. 4b is another schematic diagram of PRS resource information according to an embodiment of this application;
FIG. 5 is a schematic diagram of a predetermined rule according to an embodiment of this application;
FIG. 6 is a schematic diagram of another predetermined rule according to an embodiment of this application;
FIG. 7 is a schematic diagram of another predetermined rule according to an embodiment of this application;
FIG. 8 is a schematic diagram of another predetermined rule according to an embodiment of this application;
FIG. 9a is a schematic diagram of another predetermined rule according to an embodiment of this application;
FIG. 9b is a schematic diagram of another predetermined rule according to an embodiment of this application;
FIG. 10a is a schematic diagram of another predetermined rule according to an embodiment of this application;
FIG. 10b is a schematic diagram of another predetermined rule according to an embodiment of this application; and
FIG. 11 is a schematic diagram of an embodiment of an apparatus for measuring a positioning reference signal according to an embodiment of this application.

### DESCRIPTION OF EMBODIMENTS

Embodiments of this application provide a method for measuring a positioning reference signal. This application provides a solution that a terminal device needs to determine specific PRSs to be measured when a downlink positioning reference signal PRS measurement capability supported by the terminal device does not match or does not meet a PRS that needs to be measured and that is indicated by PRS resource information configured by a network device.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have" and any other variants thereof mean to cover the non-exclusive inclusion, so that a process, method, system, product, or device that includes a series of units is not necessarily limited to those units, but may include other units not expressly listed or inherent to such a process, method, product, or device.

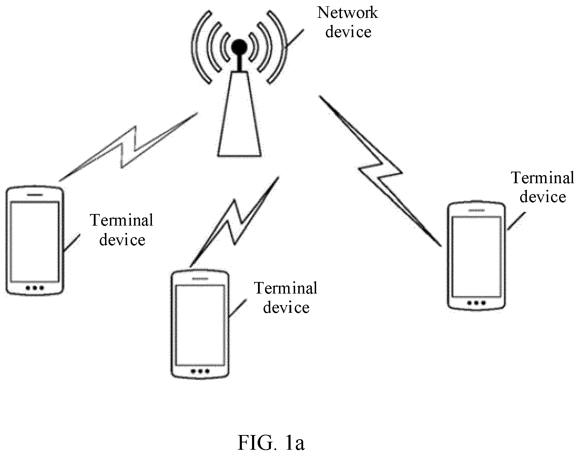

The following describes embodiments of this application with reference to the accompanying drawings. FIG. 1a is a schematic architectural diagram of a communication system according to an embodiment of this application. It should be understood that the technical solutions in embodiments of this application may be applied to various communication systems, for example, current communication systems such as a long term evolution (long term evolution, LTE) system, an LTE frequency division duplex (frequency division duplex, FDD) system, an LTE time division duplex (time division duplex, TDD) system, a code division multiple access (Code Division Multiple Access, CDMA) system, a universal mobile communications system (Universal Mobile Telecommunications System, UMTS), and a wireless local area network (wireless local area network, WLAN), and particularly applied to a 5G new radio (new radio, NR) system, a 5G system, a communication system that is based on an orthogonal frequency division multiplexing (orthogonal frequency division multiplexing, OFDM) technology, or a next-generation communication system, for example, 6G. This application is described by using a 5G system as an example, but is not limited to the 5G system. A person of ordinary skill in the art may learn that, with emergence of a new service scenario and evolution of a network architecture, the technical solutions provided in embodiments of this application are also applicable to a similar technical problem.

FIG. 1a shows an example of a communication system to which embodiments of this application are applicable. This scenario includes a network device (for simplicity, FIG. 1a provides only one network device, but it does not mean that there can be only one network device; actually, there may be any number of network devices) and a terminal device (for simplicity, FIG. 1a provides only three terminal devices, but it does not mean that there can be only three terminal devices; actually, there may be any number of terminal devices). The network device provides a service for the terminal device. It should be understood that FIG. 1a is merely a schematic diagram. The communication system may further include another network device, for example, may further include a core network device, a wireless relay device, and a wireless backhaul device (not shown in FIG. 1a). In the network structure shown in FIG. 1a, the network device may correspond to a same physical station or two different physical stations (for example, a macro base station and a micro base station), and different stations may communicate with each other.

In this embodiment of this application, the network device is an apparatus deployed in a radio access network and configured to provide a wireless communication function for the terminal device. The network device may include network devices in various forms, such as a macro base station, a micro base station (also referred to as a small cell), a relay station, and an access point. The network device may be an evolved NodeB (Evolved NodeB, eNB, or e-NodeB) in LTE or eLTE, a base station gNB ((next) generation NodeB) or Ng-eNB (next generation Evolutional NodeB) in 5G (5th generation), a transmission reception point (Transmission and Reception point, TRP), a base station in a future mobile communication system, an access node in a Wi-Fi system, a road side unit (Road Side Unit, RSU) in V2X communication, or the like, or may be a chip or a system on chip (System on Chip, SoC) inside the foregoing network device. A specific technology and a specific device form that are used by the network device are not limited in this embodiment of this application. For ease of description, in this application, the network device is sometimes referred to as a base station.

In this embodiment of this application, the terminal device may also be referred to as user equipment (User Equipment, UE), a mobile station (Mobile Station, MS), a mobile terminal device (Mobile Terminal, MT), or the like. The terminal device may communicate with one or more core network elements through a radio access network (Radio Access Network, RAN). The terminal device may be a device having a wireless transceiver function, and may be deployed on land, including an indoor or outdoor device, a handheld device, or a vehicle-mounted device; or may be deployed on water (for example, on a ship); or may be deployed in the air (for example, on an airplane, a balloon, or a satellite). The terminal device may be a mobile phone (mobile phone), a tablet computer (Pad), a computer having a wireless transceiver function, a virtual reality (Virtual Reality, VR) terminal device, an augmented reality (Augmented Reality, AR) terminal device, a wireless terminal device in industrial control (industrial control), a wireless terminal device in self driving (self driving), a wireless terminal device in remote medicine (remote medicine), a wireless terminal device in a smart grid (smart grid), a wireless terminal device in transportation safety (transportation safety), a wireless terminal device in a smart city (smart city), a wireless terminal device in a smart home (smart home), a navigation apparatus, an internet of things (IoT) apparatus, a wearable device, a vehicle-mounted device, or the like. For ease of description, in this application, the terminal device is sometimes referred to as UE.

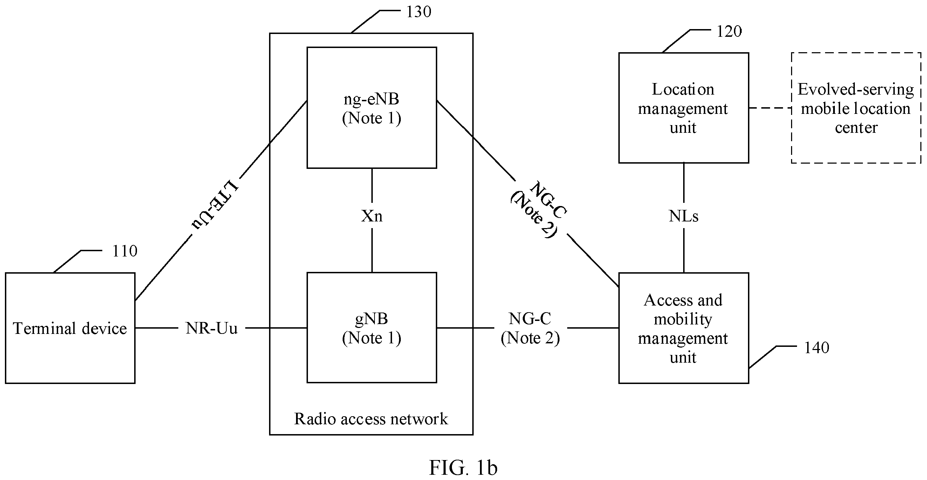

For example, the communication system provided in this embodiment of this application may use a 5G technology. FIG. 1b is a schematic architectural diagram of another communication system according to an embodiment of this application. There is a communication connection between a terminal device 110 and a radio access network 130. Specifically, the terminal device 110 communicates with a gNB through an NR-Uu interface, and the terminal device 110 communicates with an Ng-eNB through an LTE-Uu interface. The radio access network 130 (the gNB and the Ng-eNB) communicates with an access and mobility management unit (access and mobility management function, AMF) 140 through an NG-C interface, and the AMF 140 is equivalent to a router for communication between the gNB and a location management unit (Location management function, LMF) 120. The LMF 120 implements location estimation of the terminal device 110, and the AMF 140 communicates with the LMF 120 through an NLs interface. An evolved serving mobile location center (Evolved-Serving Mobile Location Center, E-SMLC) obtains a positioning request of the terminal device 110 through the radio access network 130.

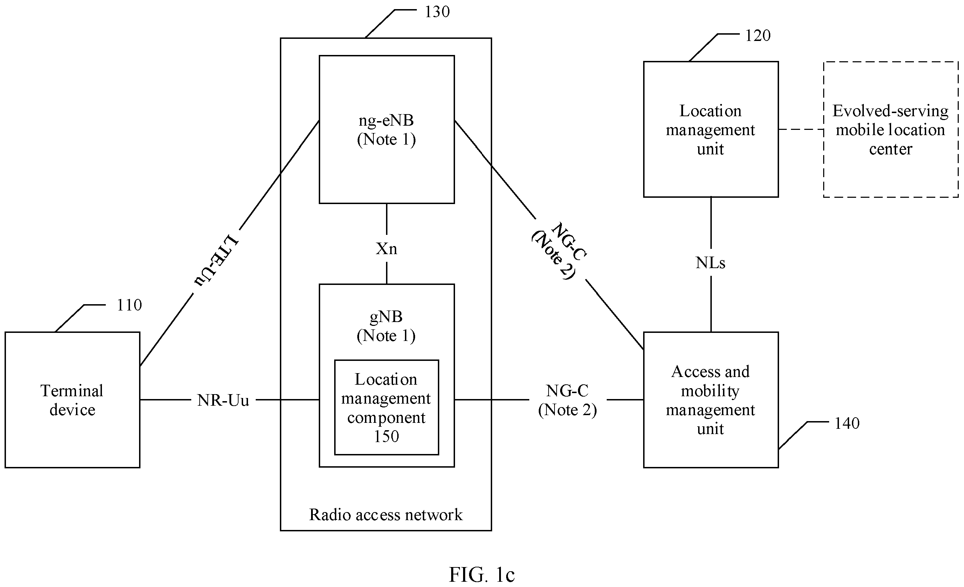

Optionally, FIG. 1c is a schematic architectural diagram of still another communication system according to an embodiment of this application. A part of functions of an LMF 120 are implemented by a location management component (location management component, LMC) 150, and the LMC 150 is integrated into a gNB. In FIG. 1c, a communication relationship between a terminal device 110 and a radio access network 130 is similar to that in the communication system shown in FIG. 1b, and details are not described herein again.

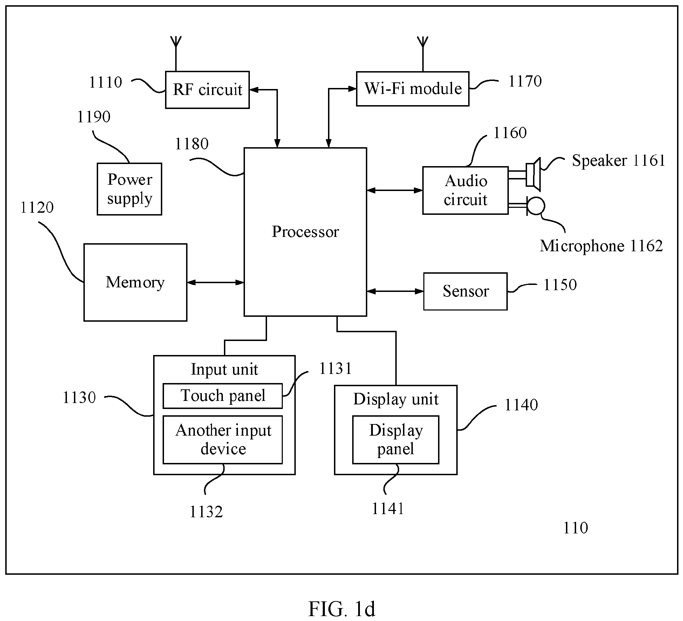

Optionally, the network elements (for example, the LMF 120 and the terminal device 110) in FIG. 1b to FIG. 1c may be implemented by one device, or may be jointly implemented by a plurality of devices, or may be a functional module in one device. This is not specifically limited in this embodiment of this application. It can be understood that, the foregoing function may be a network element in a hardware device, or may be a software function running on dedicated hardware, or may be a virtualization function instantiated on a platform (for example, a cloud platform). For example, the terminal device 110 in FIG. 1b to FIG. 1c may be implemented by a terminal device 110 in FIG. 1d. FIG. 1d is a schematic diagram of a hardware structure of a terminal device according to an embodiment of this application. The terminal device 110 includes components such as a radio frequency (Radio Frequency, RF) circuit 1110, a memory 1120, an input unit 1130, a display unit 1140, a sensor 1150, an audio circuit 1160, a wireless fidelity (wireless fidelity, Wi-Fi) module 1170, a processor 1180, and a power supply 1190. It may be understood by a person skilled in the art that, the structure of the terminal device 110 shown in FIG. 1d does not constitute a limitation on the terminal device 110, and the terminal device 110 may include more or fewer components than those shown in the figure, or combine some components, or have different component arrangements.

The RF circuit 1110 may be configured to send and receive signals in an information sending and receiving process or a call process. Particularly, the RF circuit 1110 receives downlink information from a network device, then delivers the downlink information to the processor 1180 for processing. In addition, the RF circuit 1110 sends related uplink data to the network device. The RF circuit 1110 usually includes but is not limited to an antenna, at least one amplifier, a transceiver, a coupler, a low noise amplifier (Low Noise Amplifier, LNA), a duplexer, and the like. In addition, the RF circuit 1110 may further communicate with a network and another device through wireless communication. The foregoing wireless communication may use any communication standard or protocol, including but not limited to code division multiple access (Code Division Multiple Access, CDMA), wideband code division multiple access (Wideband Code Division Multiple Access, WCDMA), long term evolution (Long Term Evolution, LTE), a 5th generation new radio (5th generation new radio, 5G-NR) system, an e-mail, a short message service (Short Message Service, SMS), and the like.

The memory 1120 may be configured to store a software program and a module. The processor 1180 performs various function applications of the terminal device 110 and data processing by running the software program and the module stored in the memory 1120. The memory 1120 may mainly include a program storage area and a data storage area. The program storage area may store an operating system, an application program (such as a sound playing function or an image playing function) that is required by at least one function, and the like. The data storage area may store data (such as audio data or a phone book) that is created based on use of the terminal device 110, and the like. In addition, the memory 1120 may include a high speed random access memory, and may further include a non-volatile memory such as at least one magnetic disk storage device, a flash memory, or another volatile solid-state storage device.

The input unit 1130 may be configured to: receive entered digit or character information, and generate a key signal input related to a user setting and function control of the terminal device 110. Specifically, the input unit 1130 may include a touch panel 1131 and another input device 1132. The touch panel 1131, also referred to as a touchscreen, may collect a touch operation (for example, an operation performed by a user on or near the touch panel 1131 by using any proper object or accessory such as a finger or a stylus) performed by the user on or near the touch panel 1131, and may drive a corresponding connection apparatus based on a preset program. Optionally, the touch panel 1131 may include two parts: a touch detection apparatus and a touch controller. The touch detection apparatus detects a touch direction and location of the user, detects a signal brought by the touch operation, and transmits the signal to the touch controller. The touch controller receives touch information from the touch detection apparatus, converts the touch information into touch point coordinates, then sends the touch point coordinates to the processor 1180, and receives and executes a command sent by the processor 1180. In addition, the touch panel 1131 may be implemented in a plurality of types, such as a resistive type, a capacitive type, an infrared type, and a surface acoustic wave type. The input unit 1130 may further include the another input device 1132 in addition to the touch panel 1131. Specifically, the another input device 1132 may include but is not limited to one or more of a physical keyboard, a function button (such as a volume control button or a power button), a trackball, a mouse, a joystick, and the like.

The display unit 1140 may be configured to display information entered by the user or information provided for the user, and various menus of the terminal device 110. The display unit 1140 may include a display panel 1141. Optionally, the display panel 1141 may be configured in a form of a liquid crystal display (Liquid Crystal Display, LCD), an organic light-emitting diode (Organic Light-Emitting Diode, OLED), or the like. Further, the touch panel 1131 may cover the display panel 1141. After detecting a touch operation on or near the touch panel 1131, the touch panel 1131 transmits the touch operation to the processor 1180 to determine a type of a touch event, and then the processor 1180 provides a corresponding visual output on the display panel 1141 based on the type of the touch event. In FIG. 1d, the touch panel 1131 and the display panel 1141 are used as two independent components to implement an input function and an output function of the terminal device 110. However, in some embodiments, the touch panel 1131 and the display panel 1141 may be integrated to implement the input function and the output function of the terminal device 110.

The terminal device 110 may further include at least one sensor 1150, such as a light sensor, a movement sensor, and another sensor. Specifically, the light sensor may include an ambient light sensor and a proximity sensor. The ambient light sensor may adjust luminance of the display panel 1141 based on brightness of ambient light, and when the terminal device 110 approaches an ear, the proximity sensor may turn off the display panel 1141 and/or backlight. As a type of movement sensor, an accelerometer sensor may detect a value of acceleration in each direction (usually on three axes), may detect a value and a direction of gravity in a stationary state, and may be used in an application for identifying a posture (such as screen switching between a landscape mode and a portrait mode, a related game, or magnetometer posture calibration) of the terminal device 110, a function related to vibration identification (such as a pedometer or a knock), or the like. Other sensors such as a gyroscope, a barometer, a hygrometer, a thermometer, and an infrared sensor may be further configured in the terminal device 110. Details are not described herein.

The audio circuit 1160, a speaker 1161, and a microphone 1162 may provide an audio interface between the user and the terminal device 110. The audio circuit 1160 may transmit, to the speaker 1161, an electrical signal obtained after conversion of received audio data, and then the speaker 1161 converts the electrical signal into a sound signal and outputs the sound signal. In addition, the microphone 1162 converts a collected sound signal into an electrical signal. The audio circuit 1160 receives the electrical signal and converts the electrical signal into audio data, and then outputs the audio data to the processor 1180 for processing. Then, processed audio data is sent to, for example, another terminal device 110, through the RF circuit 1110, or the audio data is output to the memory 1120 for further processing.

Wi-Fi is a short-distance wireless transmission technology. With the Wi-Fi module 1170, the terminal device 110 may help the user send and receive an e-mail, browse a web page, access streaming media, and the like. The Wi-Fi module 1170 provides wireless access to the broadband internet for the user. Although FIG. 1d shows the Wi-Fi module 1170, it may be understood that the Wi-Fi module 1170 is not necessary for the terminal device 110, and may be omitted based on a requirement without changing the essence of this application.

The processor 1180 is a control center of the terminal device 110. The processor 1180 connects components of the entire terminal device 110 through various interfaces and lines, and performs various functions of the terminal device 110 and data processing by running or executing the software program and/or the module stored in the memory 1120 and invoking the data stored in the memory 1120, to perform overall monitoring on the terminal device 110. Optionally, the processor 1180 may include one or more processing units. Optionally, an application processor and a modem processor may be integrated in the processor 1180. The application processor mainly processes an operating system, a user interface, an application program, and the like. The modem processor mainly processes wireless communication. It may be understood that the modem processor may alternatively not be integrated into the processor 1180.

The terminal device 110 further includes the power supply 1190 (such as a battery) for supplying power to each component. Optionally, the power supply may be logically connected to the processor 1180 by using a power supply management system, to implement functions such as charging, discharging, and power consumption management by using the power supply management system.

Although not shown in the figure, the terminal device 110 may further include a camera, a Bluetooth module, and the like, and details are not described herein.

The following describes a method part provided in embodiments of this application. First, a terminal device positioning method in a conventional technology is described.

There are a plurality of purposes for obtaining a location of a terminal device, for example, an emergency call, navigation, or distance measurement. Currently, the terminal device may obtain the location of the terminal device by using a satellite positioning system that is based on a space-based system. The space-based system includes but is not limited to the GPS, the GLONASS, the Galileo, the BeiDou, or another regional satellite positioning system (SPS), for example, the IRNSS, the EGNOS, or the WAAS. The terminal device may further use a positioning method implemented based on interaction between the terminal device and a network device, for example, an observed time difference of arrival (observed time difference of arrival, OTDOA) positioning method, a downlink time difference of arrival (downlink time difference of arrival, DL-TDOA), a downlink angle-of-departure (Downlink angle-of-departure, DL-AoD), or multi round-trip time (multi round-trip time, Multi-RTT).

The location of the terminal device includes location coordinates (for example, latitude and longitude) of the terminal device, and the location coordinates may include an altitude component (for example, a height above a sea level, a height above a ground plane a depth below a ground plane, a floor plane, or a basement plane). Optionally, the location of the terminal device may be represented as a city location (for example, a postal address or a name of a point or a small area (for example, a specific room or floor) in a building). The location of the terminal device may alternatively be represented as an area or three-dimensional space (defined geographically or in a form of a city), and the terminal device is expected to be positioned in the area or the three-dimensional space at a probability or a trust level (for example, 67% or 95%). The location of the terminal device may be further a relative position, including, for example, a distance and a direction, or relative coordinates X, Y (and Z) defined relative to a start point at a known position. The known location may be defined by using a point, an area, or three-dimensional space indicated geographically or by using a city term, a reference map, a floor plan, or a building plan.

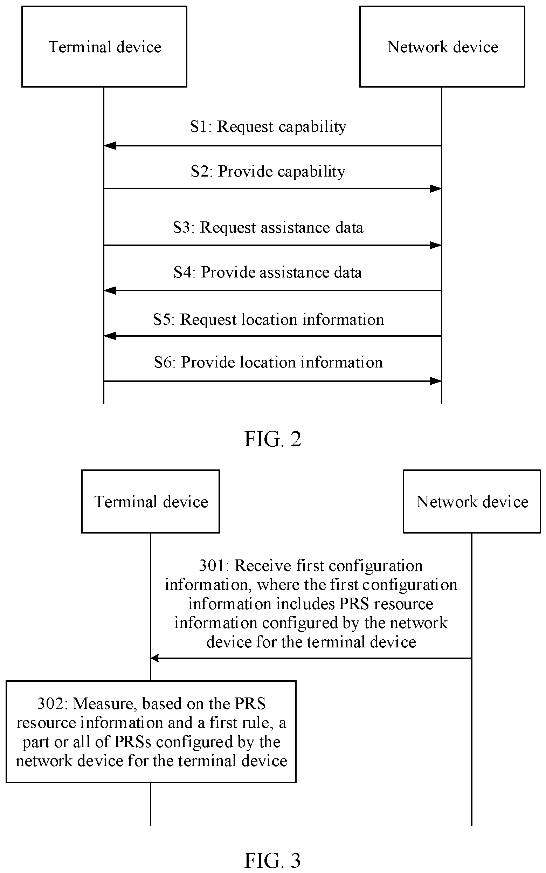

An example in which the positioning method is the OTDOA is used to describe an interaction procedure between the terminal device and the network device. FIG. 2 is a schematic flowchart of a positioning method according to an embodiment of this application.

### S1: Request capability.

In step S1, when a network device needs to obtain a current location of a terminal device, the network device sends a request capability (Request Capabilities) message to the terminal device.

### S2: Provide capability.

In step S2, the terminal device sends a provide capability (Provide Capabilities) message to the network device based on the request capability message. A capability includes a PRS measurement capability supported by the terminal device, for example, whether to support cell measurement on an unlimited frequency, or another related downlink PRS measurement capability.

### S3: Request assistance data.

In step S3, after the terminal device provides the capability for the network device, the terminal device sends a request assistance data (Request Assistance Data) message to the network device.

### S4: Provide assistance data.

In step S4, after the network device receives the request assistance data message of the terminal device, the network device sends a provide assistance data (Provide Assistance Data) message to the terminal device. When the capability provided by the terminal device for the network device includes whether to support cell measurement on an unlimited frequency, the assistance message includes a list of neighboring cells that need to be measured by the terminal device. Optionally, the list of neighboring cells is sorted based on cell identities (IDs).

After receiving assistance data, the terminal device selects a reference cell and sorts a list of neighboring cells based on content of the assistance data, and further measures a PRS, where the PRS is configured by the network device for the terminal device.

### S5: Request location information.

In step S5, the network device sends a request location information (Request Location Information) message to the terminal device.

### S6: Provide location information.

In step S6, after the terminal device receives the request location information message of the network device, the terminal device reports a PRS measurement value obtained in step S4 to the network device.

With evolution of communication technologies, the terminal device further needs to measure a PRS with reference to the following parameters, for example, a frequency layer (frequency layer), a transmission reception point (transmission reception point, TRP), a resource set (resource set), and a resource (resource).

The network device needs to configure PRS resource information for the terminal device, where the PRS resource information may be a PRS index list (PRS-IndexList), and the PRS resource information indicates a PRS that needs to be measured by the terminal device. The terminal device measures the PRS based on the indication of the PRS resource information. Due to performance differences between different terminal devices, downlink PRS measurement capabilities supported by the different terminal devices may be different. The terminal device cannot determine specific PRSs to be measured when a downlink PRS measurement capability supported by the terminal device does not match or does not meet a PRS that needs to be measured and that is indicated by the PRS resource information.

Based on this, embodiments of this application provide a method for measuring a positioning reference signal. This application provides a solution that the terminal device needs to determine specific PRSs to be measured when a downlink positioning reference signal PRS measurement capability supported by a terminal device does not match a PRS that needs to be measured and that is indicated by PRS resource information configured by a network device, or the downlink positioning reference signal PRS measurement capability supported by the terminal device does not meet the PRS that needs to be measured and that is indicated by the PRS resource information configured by the network device. FIG. 3 is a schematic diagram of an embodiment of positioning reference signal measurement according to an embodiment of this application. The method for measuring a positioning reference signal provided in this embodiment of this application includes the following steps.

301: Receive first configuration information, where the first configuration information includes PRS resource information configured by a network device for a terminal device.

In this embodiment, after the terminal device requests assistance data from the network device, the terminal device receives the PRS resource information configured by the network device for the terminal device. Information carrying the PRS resource information is referred to as the first configuration information. The PRS resource information configured by the network device for the terminal device includes: a number of frequency layers, a number of transmission reception points at each frequency layer, a number of resource sets of each TRP, and a number of resources in each resource set.

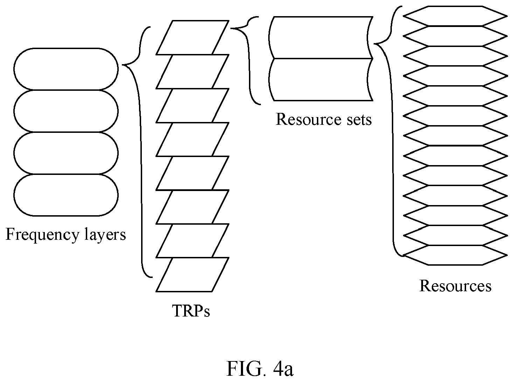

For example, FIG. 4a is a schematic diagram of the PRS resource information according to this embodiment of this application. The PRS resource information configured by the network device for the terminal device includes four frequency layers, each frequency layer includes eight TRPs, each TRP includes two resource sets, and each resource set includes 13 resources. It should be understood that the foregoing values are merely examples, and an actual value may alternatively be another integer. This is not limited in this application.

Optionally, when the method for measuring a positioning reference signal provided in this embodiment of this application is used in the communication system shown in FIG. 1b, the first configuration information may be carried in an LTE positioning protocol (LTE positioning protocol, LPP). Specifically, an LMF sends PRS resource information to the terminal device through the LPP, where the PRS resource information may be a PRS index list.

Optionally, when the method for measuring a positioning reference signal provided in this embodiment of this application is used in the communication system shown in FIG. 1b, the first configuration information may be carried in radio resource control (radio resource control, RRC). Specifically, an LMC sends PRS resource information to the terminal device through the RRC, where the PRS resource information may be a PRS index list.

302: Measure, based on the PRS resource information and a predetermined rule, a part or all of PRSs configured by the network device for the terminal device.

In this embodiment, after receiving the PRS resource information configured by the network device, the terminal device measures, based on the PRS resource information and the predetermined rule, the part or all of the PRSs configured by the network device for the terminal device.

Specifically, the PRS resource information includes: the number of frequency layers, the number of transmission reception points TRPs at each frequency layer, the number of resource sets of each TRP, and the number of resources in each resource set. For example, the PRS resource information is that shown in Table 1.

**Table 1**

| Number of frequency layers | Number of transmission reception points TRPs at each frequency layer | Number of resource sets of each TRP | Number of resources in each resource set |
|---|---|---|---|
| 4 | 64 | 2 | 64 |

First, the terminal device selects, based on a supported downlink PRS measurement capability, a part or all of resources from the PRS resource information configured by the network device.

The downlink PRS measurement capability supported by the terminal device includes at least one of the following plurality of items:
(1) the number of frequency layers, where optionally, the number of frequency layers is indicated by "numPositioningFrequency Layer - r 16";
(2) the number of TRPs at each frequency layer, that is, a number of TRPs supported by each frequency layer supported by the terminal device, where for example, if the terminal device supports four frequency layers, and each frequency layer supports eight TRPs, the number of TRPs at each frequency layer supported by the terminal device is 8; optionally, the number of TRPs at each frequency layer is indicated by "numTrpPerPositioningFrequency Layer - r 16";
(3) a total number of TRPs, that is, a product of the number of TRPs supported by each frequency layer in all frequency layers supported by the terminal device and the number of supported frequency layers, where for example, if the terminal device supports four frequency layers, and each frequency layer supports eight TRPs, the total number of TRPs supported by the terminal device is 32;
(4) the number of resource sets of each TRP, that is, a number of resource sets supported by each TRP supported by the terminal device, where for example, if the terminal device supports four frequency layers, each frequency layer supports eight TRPs, and each TRP supports two resource sets, the number of resource sets of each TRP supported by the terminal device is 2; optionally, the number of resource sets of each TRP is indicated by "numDL-PRS-ResourceSetsPerTRP-r16";
(5) the number of resources in each resource set, that is, a number of resources supported by each resource set supported by the terminal device, where for example, if the terminal device supports four frequency layers, each frequency layer supports eight TRPs, each TRP supports two resource sets, and each resource set supports eight resources, the number of resources in each resource set supported by the terminal device is 8; optionally, the number of resources in each resource set is indicated by "numDL-PRS-ResourcesPerSet-r16";
(6) a number of resources at each frequency layer, that is, a product of the number of TRPs supported by each frequency layer supported by the terminal device, the number of resource sets supported by each TRP, and the number of resources supported by each resource set, where for example, if the terminal device supports four frequency layers, each frequency layer supports eight TRPs, each TRP supports two resource sets, and each resource set supports five resources, the number of resources at each frequency layer supported by the terminal device is 80; and
(7) a total number of resources, that is, a product of the number of all frequency layers supported by the terminal device, the number of TRPs supported by each frequency layer, the number of resource sets supported by each TRP, and the number of resources supported by each resource set, where for example, if the terminal device supports four frequency layers, each frequency layer supports eight TRPs, each TRP supports two resource sets, and each resource set supports five resources, the number of resources at each frequency layer supported by the terminal device is 320; optionally, the total number of resources is indicated by "totalNum-DL-PRS-Resources-r16".

Optionally, when a downlink PRS measurement capability is not indicated or configured in the terminal device, it is considered that the terminal device can support a maximum value allowed by the downlink PRS measurement capability. For example, when the "number of frequency layers" is not indicated or configured in the downlink PRS measurement capability of the terminal device, the number of frequency layers supported by the terminal device is the maximum value 4.

A possible predetermined rule is as follows: When the terminal device supports all of a plurality of downlink PRS measurement capabilities, a resource is selected in a sequence of items in the downlink PRS measurement capabilities based on the downlink PRS measurement capabilities from resource information configured by the network device. The sequence includes: frequency layer-TRP-resource set-resource.

For example, when the downlink PRS measurement capabilities supported by the terminal device include both the "number of TRPs at each frequency layer" and the "total number of TRPs", the terminal device first selects, based on the supported number of TRPs at each frequency layer, the number of TRPs at each frequency layer from the PRS resource information configured by the network device. The terminal device then selects, based on the supported total number of TRPs, a number of TRPs corresponding to all frequency layers from the PRS resource information configured by the network device. For example, in the downlink PRS measurement capabilities supported by the terminal device, the number of TRPs at each frequency layer is 4, and the total number of TRPs is 8. Because the number of frequency layers supported by the terminal device is not indicated or configured in the downlink PRS measurement capabilities supported by the terminal device, and the number of frequency layers configured by the network device is 4, it is considered that the number of frequency layers supported by the terminal device is 4. Therefore, the total number of TRPs finally supported by the terminal device is 2^{∗}4=8. The terminal device selects two frequency layers from the PRS resource information configured by the network device, and selects four TRPs at each frequency layer.

When the downlink PRS measurement capabilities supported by the terminal device include all of the "number of resources in each resource set", the "number of resources at each frequency layer", and the "total number of resources", the terminal device selects, based on the supported number of resources in each resource set, the number of resources corresponding to each resource set from the PRS resource information configured by the network device. Next, the terminal device selects, based on the supported number of resources at each frequency layer, the number of resources corresponding to each frequency layer from the PRS resource information configured by the network device. The terminal device then selects, based on the supported total number of resources, a number of resources corresponding to all frequency layers from the PRS resource information configured by the network device. For example, in the downlink PRS measurement capabilities supported by the terminal device, the number of resources in each resource set is 8, the number of resources at each frequency layer is 128, and the total number of resources is 256. The number of frequency layers supported by the terminal device is not indicated or configured in the downlink PRS measurement capabilities supported by the terminal device, and the number of frequency layers configured by the network device is 4. However, if the total number of resources supported by the terminal device is 256, it may be learned that the number of frequency layers supported by the terminal device is 256/128=2. Therefore, the total number of resources finally supported by the terminal device is 256. The terminal device selects two frequency layers from the PRS resource information configured by the network device, selects 128 resources at each frequency layer, and selects 256 resources in total.

Specifically, the terminal device selects, based on the supported downlink PRS measurement capability, the part or all of the resources from the PRS resource information configured by the network device. Methods for selecting a part or all of resources from the PRS resource information configured by the network device are also different based on different downlink PRS measurement capabilities supported by the terminal device. A relationship between a downlink PRS measurement capability supported by the terminal device and a resource selected from the PRS resource information configured by the network device is referred to as a predetermined rule in this embodiment of this application. For ease of understanding, detailed descriptions are provided in subsequent embodiments with reference to the accompanying drawings, and details are not described herein.

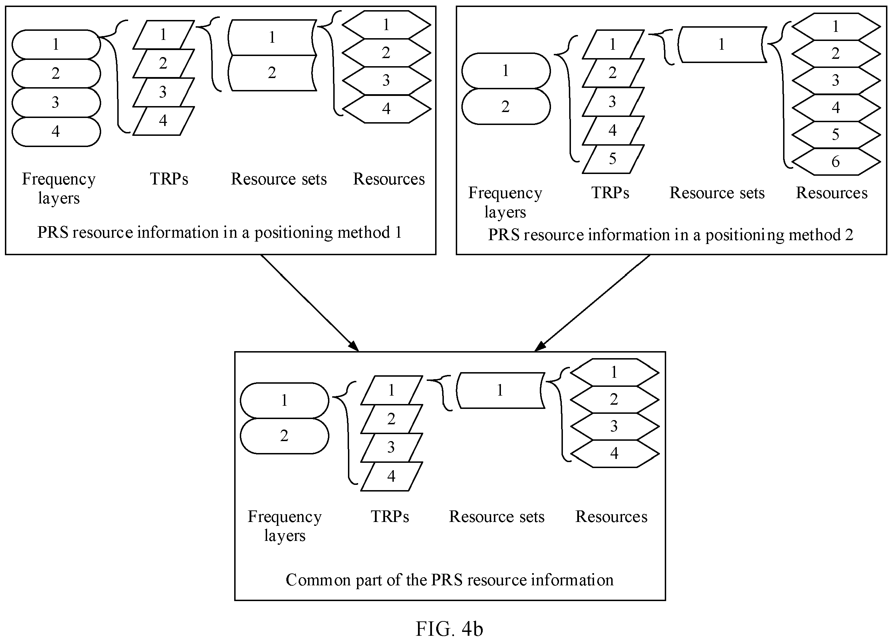

In a possible implementation, when two or more positioning methods are configured for the terminal device, the terminal device measures, based on a common part of the PRS resource information configured according to the two or more positioning methods and the predetermined rule, the part or all of the PRSs configured by the network device for the terminal device. For ease of understanding, FIG. 4b is another schematic diagram of the PRS resource information according to this embodiment of this application. PRS resource information configured in a positioning method 1 includes frequency layers 1 to 4, each frequency layer includes TRPs 1 to 4, each TRP includes resource sets 1 and 2, and each resource set includes resources 1 to 4. PRS resource information configured in a positioning method 2 includes frequency layers 1 and 2, each frequency layer includes TRPs 1 to 5, each TRP includes a resource set 1, and each resource set includes resources 1 to 6. Therefore, a common part of the two pieces of PRS resource information is determined based on the PRS resource information configured in the positioning method 1 and the PRS resource information configured in the positioning method 2. For example, the common part of the two pieces of PRS resource information includes the frequency layers 1 and 2, each frequency layer includes the TRPs 1 to 4, each TRP includes the resource set 1, and each resource set includes the resources 1 to 4.

In another possible implementation, when two or more positioning methods are configured for the terminal device, the terminal device measures, based on the PRS resource information configured according to any one of the positioning methods and the predetermined rule, the part or all of the PRSs configured by the network device for the terminal device. The PRS resource information configured in the positioning method 1 and the PRS resource information configured in the positioning method 2 shown in FIG. 4b are still used as examples. The terminal device measures, based on the PRS resource information configured in the positioning method 1 or based on the PRS resource information configured in the positioning method 2 and the predetermined rule, the part of or all of the PRSs configured by the network device for the terminal device.

In this embodiment of this application, the first configuration information is received, where the first configuration information includes the PRS resource information configured by the network device for the terminal device. The terminal device measures, based on the PRS resource information and the predetermined rule, the part or all of the PRSs configured by the network device for the terminal device. The relationship between the downlink PRS measurement capability supported by the terminal device and the resource selected from the PRS resource information configured by the network device is referred to as the predetermined rule. The terminal device selects, based on the supported downlink PRS measurement capability and the predetermined rule, the part or all of the resources from the PRS resource information configured by the network device, and then measures, based on the part or all of the resources, the PRS configured by the network device for the terminal device.

The following describes the predetermined rule provided in embodiments of this application. This application includes a plurality of possible predetermined rules, and the foregoing predetermined rule may be any one of the following plurality of predetermined rules.

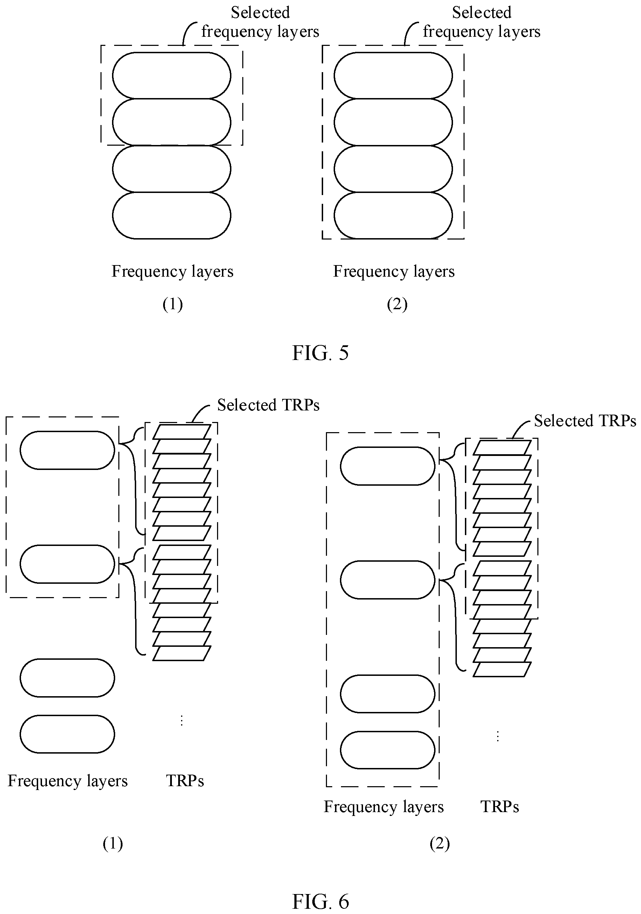

In a first predetermined rule, FIG. 5 is a schematic diagram of a predetermined rule according to an embodiment of this application. The predetermined rule includes: A terminal device selects, based on a supported number M of frequency layers, resources corresponding to the first M frequency layers or any M frequency layers from a number of frequency layers, where M is a positive integer. For example, as shown in (1) of FIG. 5, when a number of frequency layers in PRS resource information configured by a network device is 4, and the number M of frequency layers supported by the terminal device is equal to 2, the terminal device selects, based on the supported number 2 of frequency layers, resources corresponding to the first two frequency layers from the number of frequency layers. It should be noted that resources (not shown in the figure) corresponding to any two frequency layers may alternatively be selected.

Optionally, when the supported number of frequency layers is not indicated or configured in the terminal device, the number of frequency layers supported by the terminal device is equal to the number of frequency layers in the PRS resource information configured by the network device. As shown in (2) of FIG. 5, if the number of frequency layers in the PRS resource information configured by the network device is 4, the number M of frequency layers supported by the terminal device is 4.

In a second predetermined rule, FIG. 6 is a schematic diagram of another predetermined rule according to an embodiment of this application. The predetermined rule further includes: A terminal device selects, based on a supported total number T of TRPs, resources corresponding to the first T TRPs or any T TRPs from TRPs corresponding to M frequency layers, where T is a positive integer. For example, as shown in (1) of FIG. 6, when a number of frequency layers in PRS resource information configured by a network device is 4, a number of TRPs at each frequency layer is 8, the number M of frequency layers supported by the terminal device is equal to 2, and the supported total number T of TRPs is equal to 12, the terminal device selects, based on the supported total number T=12 of TRPs, resources corresponding to the first 12 TRPs at the first two frequency layers. It should be noted that resources (not shown in the figure) corresponding to any 12 TRPs may alternatively be selected.

Optionally, when the supported number of frequency layers is not indicated or configured in the terminal device, the number of frequency layers supported by the terminal device is equal to the number of frequency layers in the PRS resource information configured by the network device. For example, as shown in (2) of FIG. 6, if the number of frequency layers in the PRS resource information configured by the network device is 4, the number M of frequency layers supported by the terminal device is 4. In this case, the terminal device selects, based on the supported total number T=12 of TRPs, resources corresponding to the first 12 TRPs at the four frequency layers. It should be noted that resources (not shown in the figure) corresponding to any 12 TRPs may alternatively be selected.

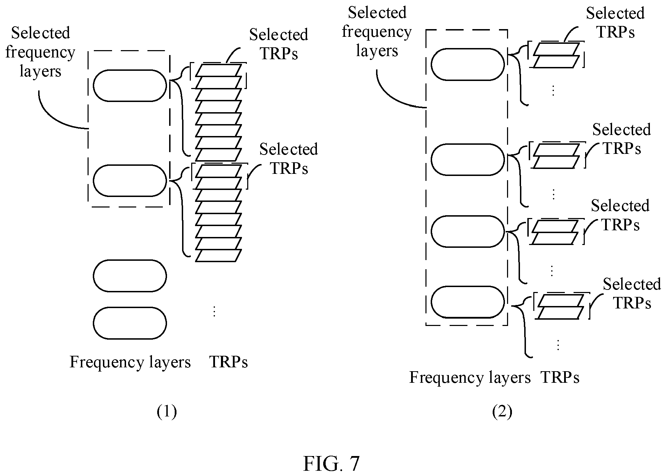

In a third predetermined rule, FIG. 7 is a schematic diagram of another predetermined rule according to an embodiment of this application. The predetermined rule further includes: A terminal device selects, based on a supported number K of TRPs at each frequency layer, resources corresponding to the first K TRPs or any K TRPs from TRPs corresponding to each of the M frequency layers, where K is a positive integer. For example, as shown in (1) of FIG. 7, when a number of frequency layers in PRS resource information configured by a network device is 4, a number of TRPs at each frequency layer is 8, the number M of frequency layers supported by the terminal device is equal to 2, and the number K of TRPs at each frequency layer is equal to 2, the terminal device selects, based on the supported number K=2 of TRPs at each frequency layer, resources corresponding to the first two TRPs from TRPs corresponding to each of the first two frequency layers. It should be noted that resources (not shown in the figure) corresponding to any 2 TRPs may alternatively be selected.

Optionally, when the terminal device does not include the supported number of frequency layers, the number of frequency layers supported by the terminal device is equal to the number of frequency layers in the PRS resource information configured by the network device. For example, as shown in (2) of FIG. 7, if the number of frequency layers in the PRS resource information configured by the network device is 4, the number M of frequency layers supported by the terminal device is 4. In this case, the terminal device selects, based on the supported number K=2 of TRPs at each frequency layer, resources corresponding to the first two TRPs at each frequency layer (the four frequency layers). It should be noted that resources (not shown in the figure) corresponding to any 2 TRPs may alternatively be selected.

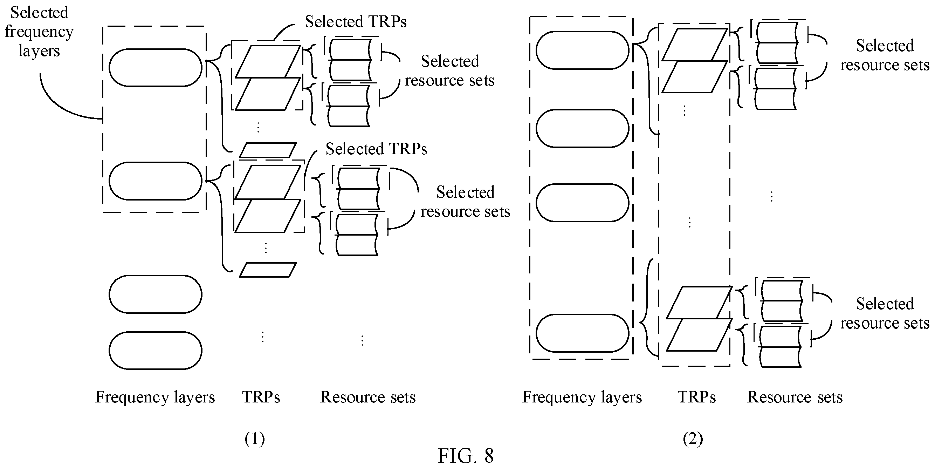

In a fourth predetermined rule, the predetermined rule further includes: A terminal device selects, based on a supported number S of resource sets, resources corresponding to the first S resource sets or any S resource sets from resource sets corresponding to each TRP included in M frequency layers, resource sets corresponding to each of K TRPs, or resource sets corresponding to each of T TRPs, where S is a positive integer. FIG. 8 is a schematic diagram of another predetermined rule according to an embodiment of this application. For example, as shown in (1) of FIG. 8, when a number of frequency layers in PRS resource information configured by a network device is 4, a number of TRPs at each frequency layer is 8, a number of resource sets of each TRP is 2, the number M of frequency layers supported by the terminal device is equal to 2, the number K of TRPs at each frequency layer is equal to 2, and the supported number S of resource sets is equal to 1, the terminal device selects, based on the supported number S=1 of resource sets, resources corresponding to the first resource set from the first two TRPs at the first two frequency layers. It should be noted that resources (not shown in the figure) corresponding to any one resource set in the first two TRPs may alternatively be selected.

Optionally, when the terminal device does not include the supported number of frequency layers, the number of frequency layers supported by the terminal device is equal to the number of frequency layers in the PRS resource information configured by the network device. For example, as shown in (2) of FIG. 8, if the number of frequency layers in the PRS resource information configured by the network device is 4, the number M of frequency layers supported by the terminal device is 4. In this case, the terminal device selects, based on the supported number S=1 of resource sets, resources corresponding to the first resource set of each TRP at each frequency layer (the four frequency layers). It should be noted that resources (not shown in the figure) corresponding to any one frequency layer in each TRP may alternatively be selected.

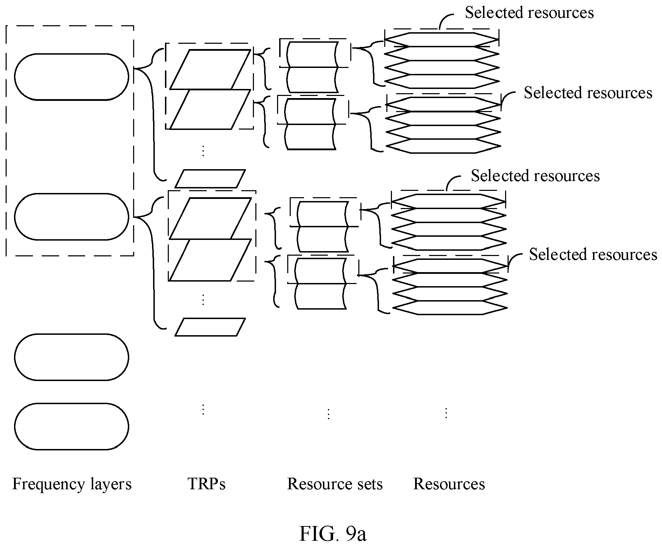

In a fifth predetermined rule, the predetermined rule further includes: A terminal device selects, based on a supported number Q of resources in each resource set, the first Q resources or any Q resources from resources corresponding to each resource set included in M frequency layers, resources corresponding to each resource set included in K TRPs, resources corresponding to each resource set included in T TRPs, or resources corresponding to each of S resource sets, where Q is a positive integer. FIG. 9a is a schematic diagram of another predetermined rule according to an embodiment of this application. For example, as shown in FIG. 9a, when a number of frequency layers in PRS resource information configured by a network device is 4, a number of TRPs at each frequency layer is 8, a number of resource sets of each TRP is 2, a number of resources in each resource set is 4, the number M of frequency layers supported by the terminal device is equal to 2, the number K of TRPs at each frequency layer is equal to 2, the supported number S of resource sets is equal to 1, and the supported number Q of resources in each resource set is equal to 1, the terminal device selects the first resource in the first resource set from the first two TRPs at the first two frequency layers based on the supported number Q=1 of resources in each resource set. It should be noted that any one resource (not shown in the figure) in the first resource set may alternatively be selected.

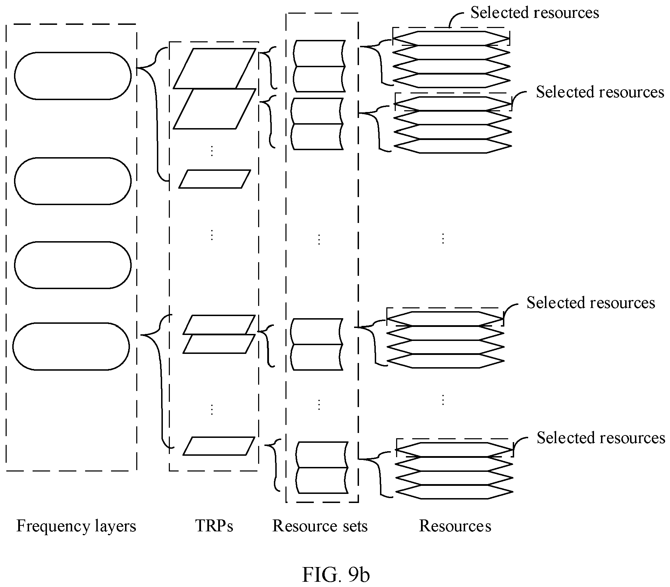

Optionally, when the terminal device does not include the supported number of frequency layers, the number of TRPs at each frequency layer, or the number of resource sets of each TRP, the number of frequency layers supported by the terminal device is equal to the number of frequency layers in the PRS resource information configured by the network device, the number of TRPs at each frequency layer supported by the terminal device is equal to the number of TRPs at each frequency layer in the PRS resource information configured by the network device, and the number of resource sets of each TRP supported by the terminal device is equal to the number of resource sets of each TRP in the PRS resource information configured by the network device. For example, as shown in FIG. 9b, the terminal device selects the first resource in each resource set of each TRP at all frequency layers (the four frequency layers) based on the supported number S=1 of resource sets. It should be noted that any one resource (not shown in the figure) in each resource set may alternatively be selected.

In a sixth predetermined rule, the predetermined rule further includes: A terminal device selects, based on a supported number E of resources at each frequency layer, the first E resources or any E resources from resources corresponding to each of M frequency layers, the first E resources or any E resources from resources corresponding to S resource sets included in each of K TRPs included in each of M frequency layers, or the first E resources or any E resources at a same frequency layer from resources corresponding to S resource sets included in each of T TRPs, where E is a positive integer. For example, when a number of frequency layers in PRS resource information configured by a network device is 4, a number of TRPs at each frequency layer is 8, a number of resource sets of each TRP is 2, a number of resources in each resource set is 4, the number M of frequency layers supported by the terminal device is equal to 2, and the supported number E of resources at each frequency layer is equal to 50, the terminal device selects the first 50 resources at each of the first two frequency layers based on the supported number E=50 of resources at each frequency layer. It should be noted that any 50 resources may alternatively be selected at each of the first two frequency layers.

Optionally, when the terminal device does not include the supported number of frequency layers, the number of frequency layers supported by the terminal device is equal to the number of frequency layers in the PRS resource information configured by the network device. For example, the terminal device selects the first 50 resources at each of all frequency layers (the four frequency layers) based on the supported number E=50 of resources at each frequency layer. It should be noted that any 50 resources may alternatively be selected at each frequency layer.

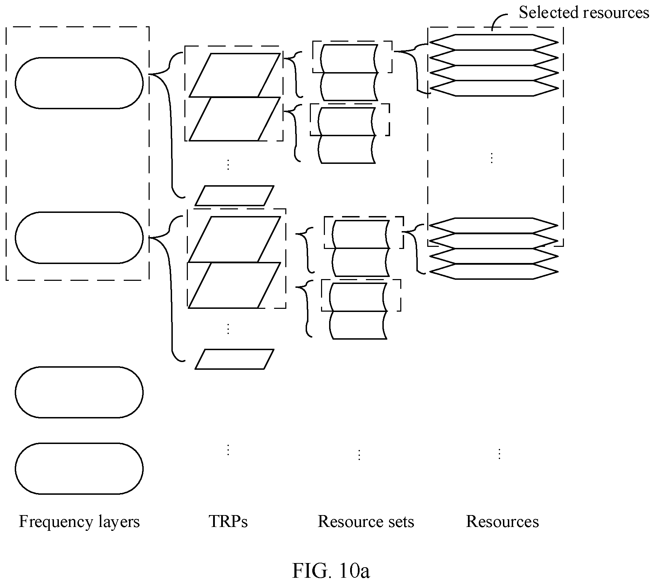

In a seventh predetermined rule, FIG. 10a is a schematic diagram of another predetermined rule according to an embodiment of this application. The predetermined rule further includes: A terminal device selects, based on a supported total number W of resources, the first W resources or any W resources from resources included in M frequency layers, resources corresponding to S resource sets included in each of K TRPs included in each of M frequency layers, or resources corresponding to S resource sets included in each of T TRPs, where W is a positive integer. For example, as shown in FIG. 10a, when a number of frequency layers in PRS resource information configured by a network device is 4, a number of TRPs at each frequency layer is 8, a number of resource sets of each TRP is 2, a number of resources in each resource set is 4, and the total number W of resources supported by the terminal device is equal to 10, the terminal device selects the first 10 resources in the first resource set from TRPs at the first two frequency layers based on the supported total number W=10 of resources. It should be noted that any 10 resources (not shown in the figure) may alternatively be selected.

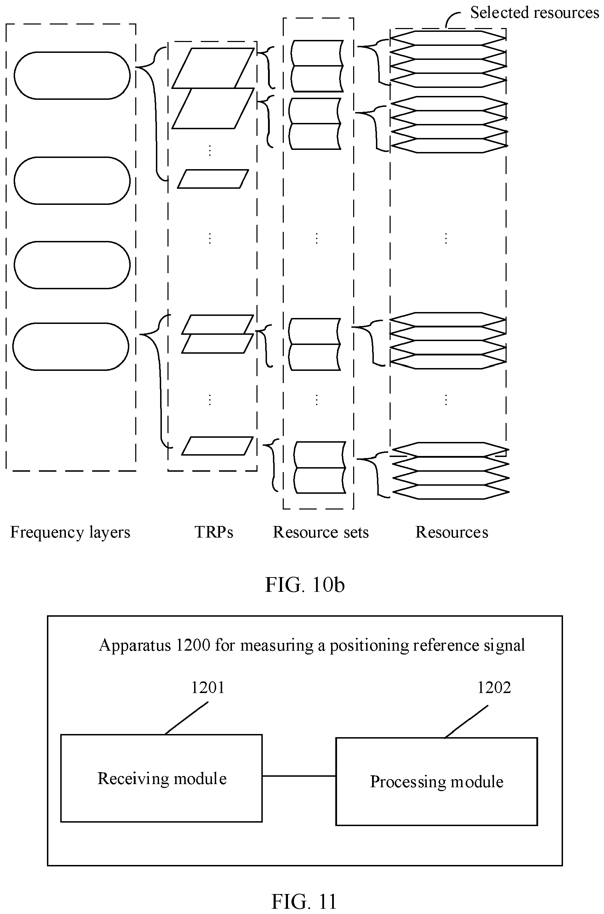

Optionally, when the terminal device does not include the supported number of frequency layers, the number of TRPs at each frequency layer, or the number of resource sets of each TRP, the number of frequency layers supported by the terminal device is equal to the number of frequency layers in the PRS resource information configured by the network device, the number of TRPs at each frequency layer supported by the terminal device is equal to the number of TRPs at each frequency layer in the PRS resource information configured by the network device, and the number of resource sets of each TRP supported by the terminal device is equal to the number of resource sets of each TRP in the PRS resource information configured by the network device. For example, as shown in FIG. 10b, the terminal device selects the first 10 resources from each resource set of each TRP at all frequency layers (the four frequency layers) based on the supported total number W= 10 of resources. It should be noted that any 10 resources (not shown in the figure) may alternatively be selected.

In an eighth predetermined rule, when a terminal device supports both a number K of TRPs at each frequency layer and a total number T of TRPs, the terminal device first selects, based on the supported number K of TRPs at each frequency layer, resources corresponding to the first K TRPs or any K TRPs from TRPs corresponding to each of M frequency layers, and determines selected K^{∗}M TRPs. The terminal device then selects, based on the supported total number T of TRPs, resources corresponding to the first T TRPs or any T TRPs from the K^{∗}M TRPs. For example, when a number of frequency layers in PRS resource information configured by a network device is 4, a number of TRPs at each frequency layer is 8, the number K of TRPs at each frequency layer supported by the terminal device is equal to 2, and the supported total number T of TRPs is equal to 12, the terminal device first selects, based on the number K=2 of TRPs at each frequency layer supported by the terminal device, resources corresponding to two TRPs (the first two TRPs or any two TRPs) at each of the four frequency layers, and determines selected K^{∗}M=4^{∗}2=8 TRPs. The terminal device then selects 12 TRPs (the first 12 TRPs or any 12 TRPs) from K^{∗}M=8 TRPs based on the supported total number T= 12 of TRPs. Because K^{∗}M=4^{∗}2=8, and T>K^{∗}M, the terminal device selects two TRPs (the first two TRPs or any two TRPs) at each of the four frequency layers, and selects resources corresponding to the eight TRPs in total.

For example, when the number of frequency layers in the PRS resource information configured by the network device is 4, the number of TRPs at each frequency layer is 8, the number M of frequency layers supported by the terminal device is equal to 2, the number K of TRPs at each frequency layer is equal to 2, and the supported total number T of TRPs is equal to 4, the terminal device first selects, based on the number K=2 of TRPs at each frequency layer supported by the terminal device, resources corresponding to two TRPs (the first two TRPs or any two TRPs) at each of the first two frequency layers, and determines selected K^{∗}M=2^{∗}2=4 TRPs. The terminal device then selects four TRPs (the first four TRPs or any four TRPs) from K^{∗}M=4 TRPs based on the supported total number T=4 of TRPs. Because, K^{∗}M=2^{∗}2=4, and T=K^{∗}M, the terminal device finally selects resources corresponding to two TRPs (the first two TRPs or any two TRPs) at each of the first two frequency layers.

A ninth predetermined rule further includes: When a terminal device supports both a number Q of resources in each resource set and a total number W of resources, the terminal device selects the first W resources or any W resources from a first candidate resource set based on the supported number Q of resources in each resource set and the supported total number W of resources, where the first candidate resource set is determined based on the Q resources supported by each resource set and one or more of a number of frequency layers supported by the terminal device, a number of TRPs supported by each frequency layer, a total number of TRPs, and a number of resource sets supported by each TRP.

Specifically, when the terminal device supports both the number Q of resources in each resource set and the total number W of resources, a resource set supported by the terminal device is first determined based on the one or more of the number of frequency layers supported by the terminal device, the number of TRPs at each frequency layer, the total number of TRPs, and the number of resource sets supported by each TRP. The downlink PRS measurement capability includes one or more of the number M of frequency layers, the number K of TRPs at each frequency layer, the total number T of TRPs, the number S of resource sets of each TRP, the number Q of resources in each resource set, the total number W of resources, and the number E of resources at each frequency layer. When the terminal device does not include any one of the foregoing downlink PRS measurement capabilities, it indicates that the terminal device supports a maximum value allowed by the downlink PRS measurement capability. For example, the maximum value allowed by the downlink PRS measurement capability is that shown in Table 2.

**Table 2**

| Downlink PRS measurement capability | Maximum value |
|---|---|
| Number of frequency layers | 4 |
| Number of TRPs at each frequency layer | 64 |
| Total number of TRPs | 256 |
| Number of resource sets supported by each TRP | 2 |
| Number of resources in each resource set | 64 |
| Total number of resources | 32768 |
| Number of resources at each frequency layer | 8192 |

The terminal device selects, based on the supported number Q of resources in each resource set, the first Q resources or any Q resources in each resource set from resources corresponding to the foregoing determined resource set supported by the terminal device, to form the first candidate resource set. Then, the terminal device selects, based on the supported total number W of resources, the first W resources or any W resources from the resources corresponding to the first candidate resource set. For example, when a number of frequency layers in PRS resource information configured by a network device is 4, a number of TRPs at each frequency layer is 8, a number of resource sets of each TRP is 2, a number of resources in each resource set is 4, and the number Q of resources in each resource set supported by the terminal device is equal to 1, the terminal device first selects the first resource in each resource set from each TRP at each frequency layer as the first candidate resource set based on the supported number Q=1 of resources in each resource set. It should be noted that any one resource may alternatively be selected. The terminal device then selects 32 resources (the first 32 resources or any 32 resources) from the first candidate resource set based on the supported total number W=32 of resources.

A tenth predetermined rule further includes: When a terminal device supports both a number Q of resources in each resource set and a number E of resources at each frequency layer, the terminal device selects the first E resources or any E resources at each frequency layer from a first candidate resource set based on the supported number Q of resources in each resource set and the supported number E of resources at each frequency layer, where the first candidate resource set is determined based on the Q resources supported by each resource set and one or more of a number of frequency layers supported by the terminal device, a number of TRPs supported by each frequency layer, a total number of TRPs, and a number of resource sets supported by each TRP.

Specifically, a resource set supported by the terminal device is first determined based on the one or more of the number of frequency layers supported by the terminal device, the number of TRPs at each frequency layer, the total number of TRPs, and the number of resource sets supported by each TRP. The terminal device selects, based on the supported number Q of resources in each resource set, the first Q resources or any Q resources from resources corresponding to the foregoing determined resource set supported by the terminal device, to form the first candidate resource set. Then, the terminal device selects, based on the supported number E of resources at each frequency layer, the first E resources or any E resources at a same frequency layer from the resources corresponding to the first candidate resource set. For example, when a number of frequency layers in PRS resource information configured by a network device is 4, a number of TRPs at each frequency layer is 8, a number of resource sets of each TRP is 2, a number of resources in each resource set is 4, and the number Q of resources in each resource set supported by the terminal device is equal to 1, the terminal device first selects the first resource in each resource set from each TRP at each frequency layer based on the supported number Q=1 of resources in each resource set, and uses selected 4^{∗}8^{∗}2^{∗}1=64 resources as the first candidate resource set. It should be noted that any one resource may alternatively be selected. The terminal device then selects 10 resources (the first 10 resources or any 10 resources) at a same frequency layer in the first candidate resource set based on the supported number E=10 of resources at each frequency layer.

An eleventh predetermined rule further includes: When a terminal device supports both a total number W of resources and a number E of resources at each frequency layer, the terminal device selects the first W resources or any W resources from a second candidate resource set based on the supported number E of resources at each frequency layer and the supported total number W of resources, where the second candidate resource set is determined based on the E resources supported by each frequency layer and one or more of a number of frequency layers supported by the terminal device, a number of TRPs supported by each frequency layer, a total number of TRPs, and a number of resource sets supported by each TRP.

Specifically, a resource set supported by the terminal device is first determined based on the one or more of the number of frequency layers supported by the terminal device, the number of TRPs at each frequency layer, the total number of TRPs, and the number of resource sets supported by each TRP. The terminal device selects, based on the number E of resources supported by each frequency layer, the first E resources or any E resources at a same frequency layer from the foregoing determined resources supported by the terminal device, to form the second candidate resource set. Then, the terminal device selects, based on the total number W of resources, the first W resources or any W resources from the resources corresponding to the second candidate resource set. For example, when a number of frequency layers in PRS resource information configured by a network device is 4, a number of TRPs at each frequency layer is 8, a number of resource sets of each TRP is 2, and a number of resources in each resource set is 4, the terminal device first selects 10 resources (the first 10 resources or any 10 resources) at each frequency layer based on the supported number E= 10 of resources at each frequency layer, and uses selected 4^{∗}10=40 resources as the second candidate resource set. The terminal device then selects 32 resources (the first 32 resources or any 32 resources) from the resources (40 resources) corresponding to the second candidate resource set based on the supported total number W=32 of resources.

A twelfth rule further includes: When a terminal device supports all of a number Q of resources in each resource set, a total number W of resources, and a number E of resources at each frequency layer, the terminal device selects the first E resources or any E resources at each frequency layer from a first candidate resource set based on the supported number Q of resources in each resource set and the supported number E of resources at each frequency layer; and the terminal device selects the first W resources or any W resources from a third candidate resource set based on the supported total number W of resources, where the third candidate resource set is determined based on the first candidate resource set and the E resources supported by each frequency layer.

Specifically, a resource set supported by the terminal device is first determined based on the one or more of the number of frequency layers supported by the terminal device, the number of TRPs at each frequency layer, the total number of TRPs, and the number of resource sets supported by each TRP. The terminal device selects, based on the supported number Q of resources in each resource set, the first Q resources or any Q resources from resources corresponding to the foregoing determined resource set supported by the terminal device, to form the first candidate resource set. Next, the terminal device selects, based on the supported number E of resources at each frequency layer, the first E resources or any E resources at a same frequency layer from the resources corresponding to the first candidate resource set, to form a third candidate resource set, where the third candidate resource set is determined based on the first candidate resource set and the E resources supported by each frequency layer. Then, the terminal device selects, based on the total number W of resources, the first W resources or any W resources from the resources corresponding to the third candidate resource set. For example, when a number of frequency layers in PRS resource information configured by a network device is 4, a number of TRPs at each frequency layer is 8, a number of resource sets of each TRP is 2, and a number of resources in each resource set is 4, the terminal device first selects the first resource in each resource set from each TRP at each frequency layer based on the supported number Q=1 of resources in each resource set. It should be noted that any one resource may alternatively be selected, a number of selected resources is 4^{∗}8^{∗}2^{∗}1=64, and the 64 resources form the first candidate resource set. Next, the terminal device selects 10 resources (the first 10 resources or any 10 resources) at each frequency layer in the first candidate resource set based on the supported number E= 10 of resources at each frequency layer. A number of selected resources is 4^{∗}10=40, and the 40 resources are used as the third candidate resource set. Then, the terminal device selects 32 resources (the first 32 resources or any 32 resources) from the third candidate resource set based on the supported total number W=32 of resources.

It should be noted that, with reference to the foregoing embodiment, when the downlink PRS measurement capability supported by the terminal device does not include a part of the downlink PRS measurement capabilities, the predetermined rule may be appropriately changed on the basis of the foregoing embodiment, so that the terminal device measures, by using a method similar to that in the foregoing embodiment and based on the PRS resource information and the predetermined rule, the part or all of the PRSs configured by the network device for the terminal device. For example, when the downlink PRS measurement capability supported by the terminal device includes only the supported number K of TRPs at each frequency layer, the predetermined rule further includes: selecting, from TRPs corresponding to each frequency layer configured in the PRS resource information, resources corresponding to the first K TRPs or any K TRPs. Specifically, first, because the number of frequency layers is not indicated or configured in the downlink PRS measurement capability, it is considered that the number of frequency layers supported by the terminal device is a maximum value, and the maximum value is a theoretical maximum value. When the PRS resource information configured by the network device includes a number Y of frequency layers, the terminal device selects Y frequency layers, where Y is a positive integer. Then, the terminal device selects, based on a number K of TRPs at each frequency layer, resources corresponding to the first K TRPs or any K TRPs from TRPs corresponding to each of the Y frequency layers. By analogy, details are not described herein again.

The foregoing mainly describes the solutions provided in embodiments of this application from the perspective of the methods. It may be understood that, to implement the foregoing functions, the apparatus for measuring a positioning reference signal includes corresponding hardware structures and/or software modules for performing the functions. A person skilled in the art should easily be aware that, in combination with the examples described in embodiments disclosed in this specification, modules, algorithm steps can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, function module division may be performed on the apparatus for measuring a positioning reference signal based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that in embodiments of this application, division into the modules is an example, and is merely logical function division. During actual implementation, there may be another division manner.

The following describes in detail an apparatus for measuring a positioning reference signal in this application. FIG. 11 is a schematic diagram of an embodiment of an apparatus for measuring a positioning reference signal according to an embodiment of this application. The apparatus 1200 for measuring a positioning reference signal includes:
a receiving module 1201, configured to receive first configuration information sent by a network device, where the first configuration information includes positioning reference signal PRS resource information configured by the network device for the terminal device, and
the PRS resource information includes: a number of frequency layers, a number of transmission reception points TRPs at each frequency layer, a number of resource sets of each TRP, and a number of resources in each resource set; and
a processing module 1202, configured to measure, based on the PRS resource information and a predetermined rule, a part or all of PRSs configured by the network device for the terminal device.

In some optional embodiments of this application, the processing module 1202 is specifically configured to: first select, based on a supported number M of frequency layers, resources corresponding to the first M frequency layers or any M frequency layers from the number of frequency layers, where M is a positive integer; and then select, based on a supported number K of TRPs at each frequency layer, resources corresponding to the first K TRPs or any K TRPs from TRPs corresponding to each of the M frequency layers, where K is a positive integer.

In some optional embodiments of this application, the processing module 1202 is specifically configured to: first select, based on a supported number M of frequency layers, resources corresponding to the first M frequency layers or any M frequency layers from the number of frequency layers, where M is a positive integer; and then select, based on a supported total number T of TRPs, resources corresponding to the first T TRPs or any T TRPs from TRPs corresponding to the M frequency layers, where T is a positive integer.

In some optional embodiments of this application, the processing module 1202 is further configured to select, based on a supported number S of resource sets of each TRP, resources corresponding to the first S resource sets or any S resource sets from resource sets corresponding to each TRP included in the M frequency layers, resource sets corresponding to each of the K TRPs, or resource sets corresponding to each of the T TRPs, where S is a positive integer.

In some optional embodiments of this application, the processing module 1202 is further configured to select, based on a supported number Q of resources in each resource set, the first Q resources or any Q resources from resources corresponding to each resource set included in the M frequency layers, resources corresponding to each resource set included in the K TRPs, resources corresponding to each resource set included in the T TRPs, or resources corresponding to each of the S resource sets, where Q is a positive integer.

In some optional embodiments of this application, the processing module 1202 is further configured to select, based on a supported total number W of resources, the first W resources or any W resources from resources included in the M frequency layers, resources corresponding to the S resource sets included in each of the K TRPs included in each of the M frequency layers, or resources corresponding to the S resource sets included in each of the T TRPs, where W is a positive integer.

In some optional embodiments of this application, the processing module 1202 is further configured to select, based on a supported number E of resources at each frequency layer, the first E resources or any E resources from resources corresponding to each of the M frequency layers, the first E resources or any E resources from resources corresponding to the S resource sets included in each of the K TRPs included in each of the M frequency layers, or the first E resources or any E resources at a same frequency layer from resources corresponding to the S resource sets included in each of the T TRPs, where E is a positive integer.

In some optional embodiments of this application, the processing module 1202 is further configured to select, based on a supported number M of frequency layers, resources corresponding to the first M frequency layers or any M frequency layers from the number of frequency layers, where M is a positive integer. When the terminal device supports both a number K of TRPs at each frequency layer and a total number T of TRPs, the processing module 1202 is further configured to: select, based on the supported number K of TRPs at each frequency layer, resources corresponding to the first K TRPs or any K TRPs from TRPs corresponding to each of the M frequency layers, and determine selected K*M TRPs. The processing module 1202 is further configured to select, based on the supported total number T of TRPs, resources corresponding to the first T TRPs or any T TRPs from the K*M TRPs.

In some optional embodiments of this application, when the terminal device supports both the number Q of resources in each resource set and the total number W of resources, the processing module 1202 is further configured to select the first W resources or any W resources from a first candidate resource set based on the supported number Q of resources in each resource set and the supported total number W of resources, where the first candidate resource set is determined based on the Q resources supported by each resource set and one or more of a number of frequency layers supported by the terminal device, a number of TRPs supported by each frequency layer, a total number of TRPs, and a number of resource sets supported by each TRP.

In some optional embodiments of this application, when the terminal device supports both the number Q of resources in each resource set and the number E of resources at each frequency layer, the processing module 1202 is further configured to select the first E resources or any E resources at each frequency layer from a first candidate resource set based on the supported number Q of resources in each resource set and the supported number E of resources at each frequency layer, where the first candidate resource set is determined based on the Q resources supported by each resource set and one or more of a number of frequency layers supported by the terminal device, a number of TRPs supported by each frequency layer, a total number of TRPs, and a number of resource sets supported by each TRP.

In some optional embodiments of this application, when the terminal device supports both the total number W of resources and the number E of resources at each frequency layer, the processing module 1202 is further configured to select the first W resources or any W resources from a second candidate resource set based on the supported number E of resources at each frequency layer and the supported total number W of resources, where the second candidate resource set is determined based on the E resources supported by each frequency layer and one or more of a number of frequency layers supported by the terminal device, a number of TRPs supported by each frequency layer, a total number of TRPs, and a number of resource sets supported by each TRP.

In some optional embodiments of this application, when the terminal device supports all of the number Q of resources in each resource set, the total number W of resources, and the number E of resources at each frequency layer, the processing module 1202 is further configured to select the first E resources or any E resources at each frequency layer from the first candidate resource set based on the supported number Q of resources in each resource set and the supported number E of resources at each frequency layer. The processing module 1202 is further configured to select the first W resources or any W resources from a third candidate resource set based on the supported total number W of resources, where the third candidate resource set is determined based on the first candidate resource set and the E resources supported by each frequency layer.

In some optional embodiments of this application, when a downlink PRS measurement capability included in the predetermined rule is not indicated or configured, it indicates that the terminal device supports a maximum value allowed by the downlink PRS measurement capability, and the downlink PRS measurement capability includes one or more of the number M of frequency layers, the number K of TRPs at each frequency layer, the total number T of TRPs, the number S of resource sets of each TRP, the number Q of resources in each resource set, the total number W of resources, and the number E of resources at each frequency layer.

In some optional embodiments of this application, when two or more positioning methods are configured for the terminal device, the processing module 1202 is further configured to measure, based on a common part of the PRS resource information configured according to the two or more positioning methods and the predetermined rule, the part or all of the PRSs configured by the network device for the terminal device.

In some optional embodiments of this application, when two or more positioning methods are configured for the terminal device, the processing module 1202 is further configured to measure, based on the PRS resource information configured according to any one of the positioning methods and the predetermined rule, the part or all of the PRSs configured by the network device for the terminal device.

The apparatus for measuring a positioning reference signal in the foregoing embodiments may be a terminal device, a chip used in the terminal device, or another combined part, component, or the like that can implement a function of the foregoing terminal device. When the apparatus for measuring a positioning reference signal is a terminal device, the receiving module may be a receiver, and may include an antenna, a radio frequency circuit, and the like, and the processing module may be a processor, for example, a baseband chip. When the apparatus for measuring a positioning reference signal is a component having a function of the foregoing terminal device, the receiving module may be a radio frequency unit, and the processing module may be a processor. When the apparatus for measuring a positioning reference signal is a chip system, the sending module may be an input interface of the chip system, and the processing module may be a processor of the chip system, for example, a central processing unit (central processing unit, CPU).

In this embodiment of this application, the processor included in the terminal device further has the following functions: The terminal device receives first configuration information sent by a network device, where the first configuration information includes positioning reference signal (positioning reference signal, PRS) PRS resource information configured by the network device for the terminal device, and the PRS resource information includes: a number of frequency layers, a number of transmission reception points TRPs at each frequency layer, a number of resource sets of each TRP, and a number of resources in each resource set. The terminal device measures, based on the PRS resource information and a predetermined rule, a part or all of PRSs configured by the network device for the terminal device, where the predetermined rule includes: The terminal device selects, based on a supported number M of frequency layers, resources corresponding to the first M frequency layers or any M frequency layers from the number of frequency layers, where M is a positive integer.

The processor is further configured to perform the method in steps 301 and 302. An example is described as follows:
The processor is specifically configured to: first select, based on a supported number M of frequency layers, resources corresponding to the first M frequency layers or any M frequency layers from the number of frequency layers, where M is a positive integer; and then select, based on a supported number K of TRPs at each frequency layer, resources corresponding to the first K TRPs or any K TRPs from TRPs corresponding to each of the M frequency layers, where K is a positive integer.

The processor is specifically configured to: first select, based on a supported number M of frequency layers, resources corresponding to the first M frequency layers or any M frequency layers from the number of frequency layers, where M is a positive integer; and then select, based on a supported total number T of TRPs, resources corresponding to the first T TRPs or any T TRPs from TRPs corresponding to the M frequency layers, where T is a positive integer.

The processor is further configured to select, based on a supported number S of resource sets of each TRP, resources corresponding to the first S resource sets or any S resource sets from resource sets corresponding to each TRP included in the M frequency layers, resource sets corresponding to each of the K TRPs, or resource sets corresponding to each of the T TRPs, where S is a positive integer.

The processor is further configured to select, based on a supported number Q of resources in each resource set, the first Q resources or any Q resources from resources corresponding to each resource set included in the M frequency layers, resources corresponding to each resource set included in the K TRPs, resources corresponding to each resource set included in the T TRPs, or resources corresponding to each of the S resource sets, where Q is a positive integer.

The processor is further configured to select, based on a supported total number W of resources, the first W resources or any W resources from resources included in the M frequency layers, resources corresponding to the S resource sets included in each of the K TRPs included in each of the M frequency layers, or resources corresponding to the S resource sets included in each of the T TRPs, where W is a positive integer.

The processor is further configured to select, based on a supported number E of resources at each frequency layer, the first E resources or any E resources from resources corresponding to each of the M frequency layers, the first E resources or any E resources from resources corresponding to the S resource sets included in each of the K TRPs included in each of the M frequency layers, or the first E resources or any E resources at a same frequency layer from resources corresponding to the S resource sets included in each of the T TRPs, where E is a positive integer.

The processor is further configured to select, based on a supported number M of frequency layers, resources corresponding to the first M frequency layers or any M frequency layers from the number of frequency layers, where M is a positive integer. When the terminal device supports both a number K of TRPs at each frequency layer and a total number T of TRPs, the processor is further configured to: select, based on the supported number K of TRPs at each frequency layer, resources corresponding to the first K TRPs or any K TRPs from TRPs corresponding to each of the M frequency layers, and determine selected K^{∗}M TRPs. The processor is further configured to select, based on the supported total number T of TRPs, resources corresponding to the first T TRPs or any T TRPs from the K^{∗}M TRPs.

When the terminal device supports both the number Q of resources in each resource set and the total number W of resources, the processor is further configured to select the first W resources or any W resources from a first candidate resource set based on the supported number Q of resources in each resource set and the supported total number W of resources, where the first candidate resource set is determined based on the Q resources supported by each resource set and one or more of a number of frequency layers supported by the terminal device, a number of TRPs supported by each frequency layer, a total number of TRPs, and a number of resource sets supported by each TRP.

When the terminal device supports both the number Q of resources in each resource set and the number E of resources at each frequency layer, the processor is further configured to select the first E resources or any E resources at each frequency layer from a first candidate resource set based on the supported number Q of resources in each resource set and the supported number E of resources at each frequency layer, where the first candidate resource set is determined based on the Q resources supported by each resource set and one or more of a number of frequency layers supported by the terminal device, a number of TRPs supported by each frequency layer, a total number of TRPs, and a number of resource sets supported by each TRP.

When the terminal device supports both the total number W of resources and the number E of resources at each frequency layer, the processor is further configured to select the first W resources or any W resources from a second candidate resource set based on the supported number E of resources at each frequency layer and the supported total number W of resources, where the second candidate resource set is determined based on the E resources supported by each frequency layer and one or more of a number of frequency layers supported by the terminal device, a number of TRPs supported by each frequency layer, a total number of TRPs, and a number of resource sets supported by each TRP.

When the terminal device supports all of the number Q of resources in each resource set, the total number W of resources, and the number E of resources at each frequency layer, the processor is further configured to select the first E resources or any E resources at each frequency layer from the first candidate resource set based on the supported number Q of resources in each resource set and the supported number E of resources at each frequency layer. The processor is further configured to select the first W resources or any W resources from a third candidate resource set based on the supported total number W of resources, where the third candidate resource set is determined based on the first candidate resource set and the E resources supported by each frequency layer.

The processor is further configured to: when a downlink PRS measurement capability included in the predetermined rule is not indicated or configured, it indicates that the terminal device supports a maximum value allowed by the downlink PRS measurement capability, and the downlink PRS measurement capability includes one or more of the number M of frequency layers, the number K of TRPs at each frequency layer, the total number T of TRPs, the number S of resource sets of each TRP, the number Q of resources in each resource set, the total number W of resources, and the number E of resources at each frequency layer.

When two or more positioning methods are configured for the terminal device, the processor is further configured to measure, based on a common part of the PRS resource information configured according to the two or more positioning methods and the predetermined rule, the part or all of the PRSs configured by the network device for the terminal device.

When two or more positioning methods are configured for the terminal device, the processor is further configured to measure, based on the PRS resource information configured according to any one of the positioning methods and the predetermined rule, the part or all of the PRSs configured by the network device for the terminal device.

This application further provides a communication system, including one or more terminal devices.

It should be noted that, the processor in embodiments of this application may be an integrated circuit chip, and has a signal processing capability. In an implementation process, the steps in the foregoing method embodiments may be completed by using a hardware integrated logic circuit in the processor, or by using instructions in a form of software. The processor may be a general-purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. Steps of the method disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memories in the system and method described in this specification include but are not limited to these memories and any memory of another appropriate type.

An embodiment of this application further provides a computer-readable medium. The computer-readable medium stores a computer program. When the computer program is executed by a computer, the method for measuring a positioning reference signal in any one of the foregoing method embodiments is implemented.

An embodiment of this application further provides a computer program product. When the computer program product is executed by a computer, the method for measuring a positioning reference signal in any one of the foregoing method embodiments is implemented.

In addition, it should be noted that the described apparatus embodiment is merely an example. The units described as separate parts may or may not be physically separate, and parts displayed as units may or may not be physical units, may be located in one position, or may be distributed on a plurality of network units. Some or all of the modules may be selected based on actual requirements to achieve the objectives of the solutions in embodiments. In addition, in the accompanying drawings of the apparatus embodiments provided by this application, connection relationships between modules indicate that the modules have communication connections with each other, which may be specifically implemented as one or more communications buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device to perform the methods described in embodiments of this application.

All or some of the foregoing embodiments may be implemented by using software, hardware, firmware, or any combination thereof. When software is used to implement embodiments, all or some of embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, a computer, an apparatus for measuring a positioning reference signal, a computing device, or a data center to another website, computer, apparatus for measuring a positioning reference signal, computing device, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, such as an apparatus for measuring a positioning reference signal or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

It should be understood that "one embodiment" or "an embodiment" mentioned in the entire specification means that particular features, structures, or characteristics related to embodiments are included in at least one embodiment of this application. Therefore, "in one embodiment" or "in an embodiment" that appears in the entire specification does not necessarily mean a same embodiment. In addition, these particular features, structures, or characteristics may be combined in one or more embodiments in any appropriate manner. It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

In addition, the terms "system" and "network" may be used interchangeably in this specification. The term "and/or" in this specification describes only an association relationship between associated objects and represents that there may be three relationships. For example, A and/or B may represent the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined based on A. However, it should be further understood that determining B based on A does not mean that B is determined based on only A. B may alternatively be determined based on A and/or other information.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example based on functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application.

In conclusion, the foregoing descriptions are merely examples of embodiments of the technical solutions of this application, but are not intended to limit the protection scope of this application. Any modification, equivalent replacement, or improvement made without departing from the spirit and principle of this application shall fall in the protection scope of this application.

## Claims

1. A method for measuring a positioning reference signal, comprising:
receiving, by a terminal device, first configuration information sent by a network device, wherein the first configuration information comprises positioning reference signal PRS resource information configured by the network device for the terminal device, and
the PRS resource information comprises:
a number of frequency layers, a number of transmission reception points TRPs at each frequency layer, a number of resource sets of each TRP, and a number of resources in each resource set; and
measuring, by the terminal device based on the PRS resource information and a predetermined rule, a part or all of PRSs configured by the network device for the terminal device.

2. The method according to claim 1, wherein the predetermined rule comprises:
selecting, by the terminal device based on a supported number M of frequency layers, resources corresponding to the first M frequency layers or any M frequency layers from the number of frequency layers, wherein M is a positive integer.

3. The method according to claim 2, wherein the predetermined rule further comprises:
selecting, by the terminal device based on a supported number K of TRPs at each frequency layer, resources corresponding to the first K TRPs or any K TRPs from TRPs corresponding to each of the M frequency layers, wherein K is a positive integer.

4. The method according to claim 2, wherein the predetermined rule further comprises:
selecting, by the terminal device based on a supported total number T of TRPs, resources corresponding to the first T TRPs or any T TRPs from TRPs corresponding to the M frequency layers, wherein T is a positive integer.

5. The method according to claim 3 or 4, wherein the predetermined rule further comprises:
selecting, by the terminal device based on a supported number S of resource sets of each TRP, resources corresponding to the first S resource sets or any S resource sets from resource sets corresponding to each TRP comprised in the M frequency layers, resource sets corresponding to each of the K TRPs, or resource sets corresponding to each of the T TRPs, wherein S is a positive integer.

6. The method according to claim 5, wherein the predetermined rule further comprises:
selecting, by the terminal device based on a supported number Q of resources in each resource set, the first Q resources or any Q resources from resources corresponding to each resource set comprised in the M frequency layers, resources corresponding to each resource set comprised in the K TRPs, resources corresponding to each resource set comprised in the T TRPs, or resources corresponding to each of the S resource sets, wherein Q is a positive integer.

7. The method according to any one of claims 2 to 5, wherein the predetermined rule further comprises:
selecting, by the terminal device based on a supported total number W of resources, the first W resources or any W resources from resources comprised in the M frequency layers, resources corresponding to the S resource sets comprised in each of the K TRPs comprised in each of the M frequency layers, or resources corresponding to the S resource sets comprised in each of the T TRPs, wherein W is a positive integer.

8. The method according to any one of claims 2 to 5, wherein the predetermined rule further comprises:
selecting, by the terminal device based on a supported number E of resources at each frequency layer, the first E resources or any E resources from resources corresponding to each of the M frequency layers,
the first E resources or any E resources from resources corresponding to the S resource sets comprised in each of the K TRPs comprised in each of the M frequency layers, or
the first E resources or any E resources at a same frequency layer from resources corresponding to the S resource sets comprised in each of the T TRPs, wherein E is a positive integer.

9. The method according to claim 2, wherein the predetermined rule comprises:
when the terminal device supports both a number K of TRPs at each frequency layer and a total number T of TRPs,
selecting, by the terminal device based on the supported number K of TRPs at each frequency layer, resources corresponding to the first K TRPs or any K TRPs from TRPs corresponding to each of the M frequency layers, and determining selected K*M TRPs; and
selecting, by the terminal device based on the supported total number T of TRPs, resources corresponding to the first T TRPs or any T TRPs from the K*M TRPs.

10. The method according to claim 6 or 7, wherein the predetermined rule further comprises:
when the terminal device supports both the number Q of resources in each resource set and the total number W of resources, selecting, by the terminal device, the first W resources or any W resources from a first candidate resource set based on the supported number Q of resources in each resource set and the supported total number W of resources, wherein the first candidate resource set is determined based on the Q resources supported by each resource set and one or more of a number of frequency layers supported by the terminal device, a number of TRPs supported by each frequency layer, a total number of TRPs, and a number of resource sets supported by each TRP.

11. The method according to claim 6 or 8, wherein the predetermined rule further comprises:
when the terminal device supports both the number Q of resources in each resource set and the number E of resources at each frequency layer,
selecting, by the terminal device, the first E resources or any E resources at each frequency layer from a first candidate resource set based on the supported number Q of resources in each resource set and the supported number E of resources at each frequency layer, wherein the first candidate resource set is determined based on the Q resources supported by each resource set and one or more of a number of frequency layers supported by the terminal device, a number of TRPs supported by each frequency layer, a total number of TRPs, and a number of resource sets supported by each TRP.

12. The method according to claim 7 or 8, wherein the predetermined rule further comprises:
when the terminal device supports both the total number W of resources and the number E of resources at each frequency layer,
selecting, by the terminal device, the first W resources or any W resources from a second candidate resource set based on the supported number E of resources at each frequency layer and the supported total number W of resources, wherein the second candidate resource set is determined based on the E resources supported by each frequency layer and one or more of a number of frequency layers supported by the terminal device, a number of TRPs supported by each frequency layer, a total number of TRPs, and a number of resource sets supported by each TRP.

13. The method according to any one of claims 10 to 12, wherein the predetermined rule further comprises:
when the terminal device supports all of the number Q of resources in each resource set, the total number W of resources, and the number E of resources at each frequency layer,
selecting, by the terminal device, the first E resources or any E resources at each frequency layer from the first candidate resource set based on the supported number Q of resources in each resource set and the supported number E of resources at each frequency layer; and
selecting, by the terminal device, the first W resources or any W resources from a third candidate resource set based on the supported total number W of resources, wherein the third candidate resource set is determined based on the first candidate resource set and the E resources supported by each frequency layer.

14. The method according to any one of claims 1 to 13, wherein when a downlink PRS measurement capability comprised in the predetermined rule is not indicated or configured, it indicates that the terminal device supports a maximum value allowed by the downlink PRS measurement capability, and the downlink PRS measurement capability comprises:
one or more of the number M of frequency layers, the number K of TRPs at each frequency layer, the total number T of TRPs, the number S of resource sets of each TRP, the number Q of resources in each resource set, the total number W of resources, and the number E of resources at each frequency layer.

15. The method according to any one of claims 1 to 14, wherein the measuring, by the terminal device based on the PRS resource information and a predetermined rule, a part or all of PRSs configured by the network device for the terminal device comprises:
when two or more positioning methods are configured for the terminal device, measuring, by the terminal device based on a common part of the PRS resource information configured according to the two or more positioning methods and the predetermined rule, the part or all of the PRSs configured by the network device for the terminal device.

16. The method according to any one of claims 1 to 14, wherein the measuring, by the terminal device based on the PRS resource information and a predetermined rule, a part or all of PRSs configured by the network device for the terminal device comprises:
when two or more positioning methods are configured for the terminal device, measuring, by the terminal device based on the PRS resource information configured according to any one of the positioning methods and the predetermined rule, the part or all of the PRSs configured by the network device for the terminal device.

17. A terminal device, wherein the terminal device comprises a processor and a radio frequency circuit connected to the processor, wherein
the radio frequency circuit is configured to receive first configuration information sent by a network device, wherein the first configuration information comprises positioning reference signal PRS resource information configured by the network device for the terminal device, and
the PRS resource information comprises: a number of frequency layers, a number of transmission reception points TRPs at each frequency layer, a number of resource sets of each TRP, and a number of resources in each resource set; and
the processor is configured to measure, based on the PRS resource information and a predetermined rule, a part or all of PRSs configured by the network device for the terminal device.

18. The terminal device according to claim 17, wherein the predetermined rule comprises:
selecting, based on a supported number M of frequency layers, resources corresponding to the first M frequency layers or any M frequency layers from the number of frequency layers, wherein M is a positive integer.

19. The terminal device according to claim 18, wherein the predetermined rule further comprises:
selecting, based on a supported number K of TRPs at each frequency layer, resources corresponding to the first K TRPs or any K TRPs from TRPs corresponding to each of the M frequency layers, wherein K is a positive integer.

20. The terminal device according to claim 18, wherein the predetermined rule further comprises:
selecting, based on a supported total number T of TRPs, resources corresponding to the first T TRPs or any T TRPs from TRPs corresponding to the M frequency layers, wherein T is a positive integer.

21. The terminal device according to claim 19 or 20, wherein the predetermined rule further comprises:
selecting, based on a supported number S of resource sets of each TRP, resources corresponding to the first S resource sets or any S resource sets from resource sets corresponding to each TRP comprised in the M frequency layers, resource sets corresponding to each of the K TRPs, or resource sets corresponding to each of the T TRPs, wherein S is a positive integer.

22. The terminal device according to claim 21, wherein the predetermined rule further comprises:
selecting, based on a supported number Q of resources in each resource set, the first Q resources or any Q resources from resources corresponding to each resource set comprised in the M frequency layers, resources corresponding to each resource set comprised in the K TRPs, resources corresponding to each resource set comprised in the T TRPs, or resources corresponding to each of the S resource sets, wherein Q is a positive integer.

23. The terminal device according to any one of claims 18 to 20, wherein the predetermined rule further comprises:
selecting, based on a supported total number W of resources, the first W resources or any W resources from resources comprised in the M frequency layers, resources corresponding to the S resource sets comprised in each of the K TRPs comprised in each of the M frequency layers, or resources corresponding to the S resource sets comprised in each of the T TRPs, wherein W is a positive integer.

24. The terminal device according to any one of claims 18 to 20, wherein the predetermined rule further comprises:
selecting, based on a supported number E of resources at each frequency layer, the first E resources or any E resources from resources corresponding to each of the M frequency layers,
the first E resources or any E resources from resources corresponding to the S resource sets comprised in each of the K TRPs comprised in each of the M frequency layers, or
the first E resources or any E resources at a same frequency layer from resources corresponding to the S resource sets comprised in each of the T TRPs, wherein E is a positive integer.

25. The terminal device according to claim 17, wherein the predetermined rule further comprises:
selecting, based on a supported number M of frequency layers, resources corresponding to the first M frequency layers or any M frequency layers from the number of frequency layers, wherein M is a positive integer; and
when the terminal device supports both a number K of TRPs at each frequency layer and a total number T of TRPs,
selecting, based on the supported number K of TRPs at each frequency layer, resources corresponding to the first K TRPs or any K TRPs from TRPs corresponding to each of the M frequency layers, and determining selected K*M TRPs; and
selecting, based on the supported total number T of TRPs, resources corresponding to the first T TRPs or any T TRPs from the K*M TRPs.

26. The terminal device according to claim 22 or 23, wherein the predetermined rule further comprises:
when the terminal device supports both the number Q of resources in each resource set and the total number W of resources,
selecting the first W resources or any W resources from a first candidate resource set based on the supported number Q of resources in each resource set and the supported total number W of resources, wherein the first candidate resource set is determined based on the Q resources supported by each resource set and one or more of a number of frequency layers supported by the terminal device, a number of TRPs supported by each frequency layer, a total number of TRPs, and a number of resource sets supported by each TRP.

27. The terminal device according to claim 22 or 24, wherein the predetermined rule further comprises:
when the terminal device supports both the number Q of resources in each resource set and the number E of resources at each frequency layer,
selecting the first E resources or any E resources at each frequency layer from a first candidate resource set based on the supported number Q of resources in each resource set and the supported number E of resources at each frequency layer, wherein the first candidate resource set is determined based on the Q resources supported by each resource set and one or more of a number of frequency layers supported by the terminal device, a number of TRPs supported by each frequency layer, a total number of TRPs, and a number of resource sets supported by each TRP.

28. The terminal device according to claim 23 or 24, wherein the predetermined rule comprises:
when the terminal device supports both the total number W of resources and the number E of resources at each frequency layer,
selecting the first W resources or any W resources from a second candidate resource set based on the supported number E of resources at each frequency layer and the supported total number W of resources, wherein the second candidate resource set is determined based on the E resources supported by each frequency layer and one or more of a number of frequency layers supported by the terminal device, a number of TRPs supported by each frequency layer, a total number of TRPs, and a number of resource sets supported by each TRP.

29. The terminal device according to any one of claims 26 to 28, wherein the predetermined rule comprises:
when the terminal device supports all of the number Q of resources in each resource set, the total number W of resources, and the number E of resources at each frequency layer,
selecting the first E resources or any E resources at each frequency layer from the first candidate resource set based on the supported number Q of resources in each resource set and the supported number E of resources at each frequency layer; and
selecting the first W resources or any W resources from a third candidate resource set based on the supported total number W of resources, wherein the third candidate resource set is determined based on the first candidate resource set and the E resources supported by each frequency layer.

30. The terminal device according to any one of claims 17 to 29, wherein when a downlink PRS measurement capability comprised in the predetermined rule is not indicated or configured, it indicates that the terminal device supports a maximum value allowed by the downlink PRS measurement capability, and the downlink PRS measurement capability comprises: one or more of the number M of frequency layers, the number K of TRPs at each frequency layer, the total number T of TRPs, the number S of resource sets of each TRP, the number Q of resources in each resource set, the total number W of resources, and the number E of resources at each frequency layer.

31. The terminal device according to any one of claims 17 to 30, wherein
when two or more positioning methods are configured for the terminal device,
the processor is further configured to measure, based on a common part of the PRS resource information configured according to the two or more positioning methods and the predetermined rule, the part or all of the PRSs configured by the network device for the terminal device.

32. The terminal device according to any one of claims 17 to 30, wherein
when two or more positioning methods are configured for the terminal device,
the processor is further configured to measure, based on the PRS resource information configured according to any one of the positioning methods and the predetermined rule, the part or all of the PRSs configured by the network device for the terminal device.

33. A computer-readable storage medium, wherein the computer-readable storage medium stores one or more computer programs, and the computer programs may be executed by one or more processors, to implement the steps of the method for measuring a positioning reference signal according to claims 1 to 16.
